# EUROPEAN PATENT APPLICATION

(11) **EP 4 187 872 A1**
(43) Date of publication of application: **31.05.2023**
(21) Application number: 21857575.1
(22) Date of filing: 12.08.2021
(51) Int. Cl.: H04L 51/58, H04M 1/724

(54) **TASK PROCESSING METHOD AND RELATED ELECTRONIC DEVICE**

(30) Priority: 20.08.2020 CN 202010844313
(71) Applicant: Huawei Technologies Co., Ltd., Shenzhen, Guangdong 518129 (CN)
(72) Inventor: LIU, Min, Shenzhen, Guangdong 518129 (CN); YU, Ping, Shenzhen, Guangdong 518129 (CN)
(74) Representative: Pfenning, Meinig & Partner mbB
(86) International application number: PCT/CN2021/112363
(87) International publication number: WO 2022/037480

(57) **Abstract**

This application discloses a task processing method and a related electronic device. The method includes: A first device obtains a first message, where the first message includes task content and description information of the task content; the first device displays a first prompt window on a first interface, where the first prompt window includes a first control and the description information of the task content, and the first control is associated with a second device; the first device receives a first input of a user for the first control; and the first device sends a first instruction to the second device in response to the first input, where the first instruction instructs the second device to execute the task content. In this way, the first device displays the description information of the task content, and the user can select the second device to execute the task content. This implements cross-device task processing. While processing a task, the first device can conveniently trigger, by using the first prompt window, the second device to process another task. This improves user experience.

## Description

This application claims priority to Chinese Patent Application No. 202010844313.0, filed with the China National Intellectual Property Administration on August 20, 2020 and entitled "TASK PROCESSING METHOD AND RELATED ELECTRONIC DEVICE", which is incorporated herein by reference in its entirety.

### TECHNICAL FIELD

This application relates to a task processing method and a related electronic device.

### BACKGROUND

Currently, a notification is designed based on a single device, and a notification of an application may be displayed in a status bar of an electronic device. A notification is used to indicate a message notification of application software, and may automatically disappear after being fleetingly displayed while no user interaction is required. For example, the notification may be a notification indicating a new message in the status bar, or a notification used for web page recommendation. When a user taps a notification on a display of the electronic device, the electronic device jumps to an application associated with the notification.

With development of a smart household technology, one user or house often has a plurality of electronic devices that can communicate with each other. Various electronic devices generally have respective device characteristics. For example, a mobile phone is more portable, a television screen has a better display effect, and a sound box has better sound quality. In a general life scenario, if the user wants to use another device to watch a video in a mobile phone, the electronic device may implement multimedia data interaction between a plurality of devices through projection, airplay (airplay), Bluetooth, or the like.

However, this manner is complex because the user needs to first select content that the user wants to watch, and then perform a series of operations on a user interface to complete a corresponding function. Therefore, how to conveniently implement interaction between devices in daily life and help the user quickly switch between devices becomes a problem that needs to be resolved.

### SUMMARY

Embodiments of this application provide a task processing method and a related electronic device, to improve a collaboration capability between devices, so that a plurality of devices can collaboratively process a task in a notification, to improve an information processing capability between the plurality of devices.

According to a first aspect, an embodiment of this application provides a task processing method. The method includes: A first device obtains a first message, where the first message includes task content and description information of the task content; the first device displays a first prompt window on a first interface, where the first prompt window includes a first control and the description information of the task content, and the first control is associated with a second device; the first device receives a first input of a user for the first control; and the first device sends a first instruction to the second device in response to the first input, where the first instruction instructs the second device to execute the task content.

The first device obtains the first message. The first message may be notification information provided by a third-party server, or may be notification information provided by a system application of the first device, or may be from another electronic device. For example, the another electronic device shares data content with the first device, and the another electronic device sends, to the first device, the first message carrying the data content. The first message includes information such as text content, the task content, and a message source. The text content briefly describes the first message, and the task content includes the data content and indicates to view the data content. All other information in the first message other than the task content may be referred to as description information of the task content, for example, the text content and the message source.

After obtaining the first message, the first device determines, from nearby devices, an available device that supports execution of the task content in the first message. The first prompt window is displayed on the first interface, and the first prompt window is used to prompt the user to select a device to execute the task content. The first prompt window includes the first control and the description information of the task content. The first control indicates the second device. When the first device detects a user operation for the first control, the first device sends the task content to the second device, and indicates the second device to execute the task content. According to the method provided in the first aspect, the first device displays the description information of the task content, and the user selects the second device to execute the task content. This implements cross-device task processing. While processing a task, the first device can conveniently trigger, by using the first prompt window, the second device to process another task. This improves user experience.

With reference to the first aspect, in a possible implementation, after the first device sends the first instruction to the second device, the method further includes: The first device displays a second control; the first device receives a second input of the user for the second control; and the first device sends a second instruction to the second device in response to the second input, where the second instruction instructs the second device to stop executing the task content. Herein, a stop control is provided. In a process in which the second device executes the task content, the first device can output the stop control (the second control), and the user controls, by using the second control, the second device to stop executing the task content. The user can suspend, at any time, the device from executing the task content. This improves user experience.

With reference to the first aspect, in a possible implementation, after the first device sends the first instruction to the second device, the method further includes: The first device displays a third control, where the third control is associated with a third device; the first device receives a third input of the user for the third control; the first device sends a second instruction to the second device in response to the third input, where the second instruction instructs the second device to stop executing the task content; and the first device sends a third instruction to the third device in response to the third input, where the third instruction instructs the third device to execute the task content. Herein, a switching control is provided. In a process in which the second device executes the task content, the first device can output the switching control (the third control), and by using the third control, the user controls the second device to stop executing the task content, and indicates another device to execute the task content. In this way, an effect of real-time switching is achieved, and the user can switch, at any time, a device that executes the task content. This improves user experience.

Optionally, the third device may restart to execute the task content, or the third device may continue execution progress of the second device and continue to execute the task content. For example, the second device is executing the task content, that is, is playing a video. In this case, the first device receives a user operation of switching to the third device for playing, and the first device indicates the second device to stop playing the video, and indicates the third device to play the video at the same time. Playing progress of the third device may be playing from the beginning, or may be continuing to play from progress in which the second device stops playing.

With reference to the first aspect, in a possible implementation, the first interface is a lock screen. That the first device sends a first instruction to the second device in response to the first input specifically includes: The first device sends the first instruction to the second device in response to the first input after the first device detects an unlock operation for the lock screen and is unlocked successfully. It is described herein that, in a scenario in which the first prompt window is output on the lock screen, when detecting the first input, the electronic device sends, to the second device after unlocking, an instruction for executing the task content.

With reference to the first aspect, in a possible implementation, the first message includes a task type of the task content. Before the first device displays the first prompt window on the first interface, the method further includes: The first device obtains device information of one or more devices within a communication range of the first device; and the first device determines, based on the device information of the one or more devices within the communication range of the first device, one or more available devices that support the task type for execution of the task content, where the available device includes the second device. The second device is a device within the communication range of the first device, and is a device that supports the task type for execution of the task content. The task type may include a video type task, an audio type task, an image and text type task, and the like. In this case, correspondingly, a device that supports execution of a video type task needs to have a display function and an audio function, a device that supports execution of an audio type task needs to have an audio function, and a device that supports execution of an image and text type task needs to have a display function and the like.

In a possible implementation, the first message includes a list of devices that support execution of the task content. Before the first device displays the first prompt window on the first interface, the method further includes: The first device obtains device information of one or more devices within a communication range of the first device; and the first device determines one or more available devices from the device information of the one or more devices within the communication range of the first device based on the device list, where the available device includes the second device. The list of devices that support execution of the task content in the first message may be a list including a device type. For example, the list of devices that support execution of the task content is a computer or a tablet computer. The list of devices that support execution of the task content in the first message may be a list including device attributes. For example, the list of devices that support execution of the task content is a device having a display function and an audio function. The list of devices that support execution of the task content in the first device may be a list including specific device identifiers, and each device identifier represents a device, or the like.

With reference to the first aspect, in a possible implementation, the method further includes: The first device determines an available device with a highest priority in the one or more available devices as the second device. A unique available device is selected based on a priority, to provide the user with a most appropriate device for executing the task content. This reduces selection operations of the user. Priority information may be set by the user, may be set by a system of the first device by default, may be set by using a third-party application, may be automatically determined by the first device based on the device attribute, or the like.

With reference to the first aspect, in a possible implementation, the method further includes: The first device determines an available device that is in the one or more available devices and that is at a shortest physical distance from the first device as the second device. A unique available device is selected based on a physical distance, to provide the user with a most appropriate device for executing the task content. This reduces selection operations of the user.

With reference to the first aspect, in a possible implementation, the first prompt window further includes a fourth control. The fourth control is associated with one or more controls, and each of the one or more controls is associated with an available device other than the second device. After the first device displays the first prompt window on the first interface, the method further includes: The first device displays the one or more controls when the first device detects a fourth input for the fourth control. Herein, a control of a list of to-be-selected devices is provided. After the first device determines one or more available devices, the first device can output the control (the fourth control) for the list of to-be-selected devices, and the user can view the one or more available devices by using the fourth control, and then autonomously select a device for executing the task content. In this way, an effect of autonomous selection is achieved, and the user can select, from a plurality of devices, a device for executing the task content. This improves user experience.

With reference to the first aspect, in a possible implementation, the one or more controls include a fifth control, and the fifth control is associated with a fifth device. After the first device displays the first prompt window on the first interface, the method further includes: The first device deletes the fifth control when one or more devices within a communication range of the first device no longer include the fifth device; and the first device displays one or more controls when the first device detects a fourth input for the fourth control, and the one or more controls do not include the fifth control. It is described herein that a control in the first prompt window can change with a device status. The fifth device is an available device at a first moment, and the first device outputs the fifth control associated with the fifth device. A status of the fifth device changes (that is, the fifth device is not within the communication range of the first device) at a second moment. In this case, the first device deletes the fifth control associated with the fifth device. Similarly, the status of the fifth device changes again (that is, the fifth device is within the communication range of the first device) at a third moment. In this case, the first device outputs the fifth control associated with the fifth device. In this way, a manner of changing an output control based on the device status improves timeliness, and can provide the user with a latest available device in real time. This improves user experience.

With reference to the first aspect, in a possible implementation, the second device and the first device are a same device. To be specific, the user can select the first device to execute the task content.

With reference to the first aspect, in a possible implementation, a same account or an associated account of a same account is logged in on the first device and the second device.

With reference to the first aspect, in a possible implementation, the first message includes email notification information, video application notification information, instant messaging message notification information, and video call notification information.

With reference to the first aspect, in a possible implementation, the first device is a mobile phone or a watch, and the second device is a computer, a tablet computer, or a television.

According to a second aspect, an embodiment of this application provides an electronic device. The electronic device may be a first device, and includes one or more processors, one or more memories, and a touchscreen. The one or more memories are coupled to the one or more processors, and the one or more memories are configured to store computer program code. The computer program code includes computer instructions. When the one or more processors execute the computer instructions, the electronic device is enabled to perform the following operations: obtaining a first message, where the first message includes task content and description information of the task content; displaying a first prompt window on a first interface, where the first prompt window includes a first control and the description information of the task content, and the first control is associated with a second device; receiving a first input of a user for the first control; and sending a first instruction to the second device in response to the first input, where the first instruction instructs the second device to execute the task content.

The electronic device obtains the first message. The first message may be notification information provided by a third-party server, or may be notification information provided by a system application of the electronic device, or may be from another electronic device. For example, the another electronic device shares data content with the electronic device, and the another electronic device sends, to the electronic device, the first message carrying the data content. The first message includes information such as text content, the task content, and a message source. The text content briefly describes the first message, and the task content includes the data content and indicates to view the data content. All other information in the first message other than the task content may be referred to as description information of the task content, for example, the text content and the message source.

After obtaining the first message, the electronic device determines, from nearby devices, an available device that supports execution of the task content in the first message. The first prompt window is displayed on the first interface, and the first prompt window is used to prompt the user to select a device to execute the task content. The first prompt window includes the first control and the description information of the task content. The first control indicates the second device. When the electronic device detects a user operation for the first control, the electronic device sends the task content to the second device, and indicates the second device to execute the task content. According to the method provided in the first aspect, the electronic device displays the description information of the task content, and the user selects the second device to execute the task content. This implements cross-device task processing. While processing a task, the electronic device can conveniently trigger, by using the first prompt window, the second device to process another task. This improves user experience.

With reference to the second aspect, in a possible implementation, after sending the first instruction to the second device, the electronic device further performs the following operations: displaying a second control; receiving a second input of the user for the second control; and sending a second instruction to the second device in response to the second input, where the second instruction instructs the second device to stop executing the task content. Herein, a stop control is provided. In a process in which the second device executes the task content, the electronic device can output the stop control (the second control), and the user controls, by using the second control, the second device to stop executing the task content. The user can suspend, at any time, the device from executing the task content. This improves user experience.

With reference to the second aspect, in a possible implementation, after sending the first instruction to the second device, the electronic device further performs the following operations: displaying a third control, where the third control is associated with a third device; receiving a third input of the user for the third control; sending a second instruction to the second device in response to the third input, where the second instruction instructs the second device to stop executing the task content; and sending a third instruction to the third device in response to the third input, where the third instruction instructs the third device to execute the task content. Herein, a switching control is provided. In a process in which the second device executes the task content, the electronic device can output the switching control (the third control), and by using the third control, the user controls the second device to stop executing the task content, and indicates another device to execute the task content. In this way, an effect of real-time switching is achieved, and the user can switch, at any time, a device that executes the task content. This improves user experience.

Optionally, the third device may restart to execute the task content, or the third device may continue execution progress of the second device and continue to execute the task content. For example, the second device is executing the task content, that is, is playing a video. In this case, the first device receives a user operation of switching to the third device for playing, and the first device indicates the second device to stop playing the video, and indicates the third device to play the video at the same time. Playing progress of the third device may be playing from the beginning, or may be continuing to play from progress in which the second device stops playing.

With reference to the second aspect, in a possible implementation, the first interface is a lock screen. That the electronic device performs the operation of sending a first instruction to the second device in response to the first input specifically includes: sending the first instruction to the second device in response to the first input after detecting an unlock operation for the lock screen and being unlocked successfully. It is described herein that, in a scenario in which the first prompt window is output on the lock screen, when detecting the first input, the electronic device sends, to the second device after unlocking, an instruction for executing the task content.

With reference to the second aspect, in a possible implementation, the first message includes a task type of the task content. Before the first prompt window is displayed on the first interface, the electronic device further performs the following operations: obtaining device information of one or more devices within a communication range of the electronic device; and determining, based on the device information of the one or more devices within the communication range of the electronic device, one or more available devices that support the task type for execution of the task content. The available devices include the second device. The second device is a device within the communication range of the electronic device, and is a device that supports the task type for execution of the task content. The task type may include a video type task, an audio type task, an image and text type task, and the like. In this case, correspondingly, a device that supports execution of a video type task needs to have a display function and an audio function, a device that supports execution of an audio type task needs to have an audio function, and a device that supports execution of an image and text type task needs to have a display function and the like.

In a possible implementation, the first message includes a list of devices that support execution of the task content. Before the first prompt window is displayed on the first interface, the electronic device further performs the following operations: obtaining device information of one or more devices within a communication range of the electronic device; and determining one or more available devices from the device information of the one or more devices within the communication range of the electronic device based on the device list. The available devices include the second device. The list of devices that support execution of the task content in the first message may be a list including a device type. For example, the list of devices that support execution of the task content is a computer or a tablet computer. The list of devices that support execution of the task content in the first message may be a list including device attributes. For example, the list of devices that support execution of the task content is a device having a display function and an audio function. The list of devices that support execution of the task content in the electronic device may be a list including specific device identifiers, and each device identifier represents a device, or the like.

With reference to the second aspect, in a possible implementation, the electronic device further performs the following operation: determining an available device with a highest priority in the one or more available devices as the second device. A unique available device is selected based on a priority, to provide the user with a most appropriate device for executing the task content. This reduces selection operations of the user. Priority information may be set by the user, may be set by a system of the electronic device by default, may be set by using a third-party application, may be automatically determined by the electronic device based on the device attribute, or the like.

With reference to the second aspect, in a possible implementation, the electronic device further performs the following operation: determining an available device that is in the one or more available devices and that is at a shortest physical distance from the first device as the second device. A unique available device is selected based on a physical distance, to provide the user with a most appropriate device for executing the task content. This reduces selection operations of the user.

With reference to the second aspect, in a possible implementation, the first prompt window further includes a fourth control. The fourth control is associated with one or more controls, and each of the one or more controls is associated with an available device other than the second device. After displaying the first prompt window on the first interface, the electronic device further performs the following operation: displaying the one or more controls when a fourth input for the fourth control is detected. Herein, a control of a list of to-be-selected devices is provided. After the electronic device determines one or more available devices, the electronic device can output the control (the fourth control) for the list of to-be-selected devices, and the user can view the one or more available devices by using the fourth control, and then autonomously select a device for executing the task content. In this way, an effect of autonomous selection is achieved, and the user can select, from a plurality of devices, a device for executing the task content. This improves user experience.

With reference to the second aspect, in a possible implementation, the one or more controls include a fifth control, and the fifth control is associated with a fifth device. After displaying the first prompt window on the first interface, the electronic device further performs the following operations: deleting the fifth control when one or more devices within a communication range of the electronic device no longer include the fifth device; and displaying one or more controls when a fourth input for the fourth control is detected, where the one or more controls do not include the fifth control. It is described herein that a control in the first prompt window can change with a device status. The fifth device is an available device at a first moment, and the electronic device outputs the fifth control associated with the fifth device. A status of the fifth device changes (that is, the fifth device is not within the communication range of the electronic device) at a second moment. In this case, the electronic device deletes the fifth control associated with the fifth device. Similarly, the status of the fifth device changes again (that is, the fifth device is within the communication range of the electronic device) at a third moment. In this case, the electronic device outputs the fifth control associated with the fifth device. In this way, a manner of changing an output control based on the device status improves timeliness, and can provide the user with a latest available device in real time. This improves user experience.

With reference to the second aspect, in a possible implementation, the second device and the electronic device are a same device. To be specific, the user can select the electronic device to execute the task content.

With reference to the second aspect, in a possible implementation, a same account or an associated account of a same account is logged in on the electronic device and the second device.

With reference to the second aspect, in a possible implementation, the first message includes email notification information, video application notification information, instant messaging message notification information, and video call notification information.

With reference to the second aspect, in a possible implementation, the electronic device is a mobile phone or a watch, and the second device is a computer, a tablet computer, or a television.

According to a third aspect, an embodiment of this application provides a task processing system, including a first device and a second device.

The first device is configured to obtain a first message, where the first message includes task content and description information of the task content.

The first device is further configured to display a first prompt window on a first interface, where the first prompt window includes a first control and the description information of the task content, and the first control is associated with a second device.

The first device is further configured to receive a first input of a user for the first control.

The first device is further configured to send a first instruction to the second device in response to the first input.

The second device is configured to execute the task content according to the received first instruction.

The first device obtains the first message. The first message may be notification information provided by a third-party server, or may be notification information provided by a system application of the first device, or may be from another electronic device. For example, the another electronic device shares data content with the first device, and the another electronic device sends, to the first device, the first message carrying the data content. The first message includes information such as text content, the task content, and a message source. The text content briefly describes the first message, and the task content includes the data content and indicates to view the data content. All other information in the first message other than the task content may be referred to as description information of the task content, for example, the text content and the message source.

After obtaining the first message, the first device determines, from nearby devices, an available device that supports execution of the task content in the first message. The first prompt window is displayed on the first interface, and the first prompt window is used to prompt the user to select a device to execute the task content. The first prompt window includes the first control and the description information of the task content. The first control indicates the second device. When the first device detects a user operation for the first control, the first device sends the task content to the second device, and indicates the second device to execute the task content. According to the method provided in the first aspect, the first device displays the description information of the task content, and the user selects the second device to execute the task content. This implements cross-device task processing. While processing a task, the first device can conveniently trigger, by using the first prompt window, the second device to process another task. This improves user experience.

With reference to the third aspect, in a possible implementation, the first device is further configured to display a second control after sending the first instruction to the second device. The first device is further configured to receive a second input of the user for the second control. The first device is further configured to send a second instruction to the second device in response to the second input. The second device is further configured to stop executing the task content based on the received second instruction.

With reference to the third aspect, in a possible implementation, the system further includes a third device. The first device is further configured to display a third control after sending the first instruction to the second device. The third control is associated with the third device. The first device is further configured to receive a third input of the user for the third control. The first device is further configured to send a second instruction to the second device in response to the third input. The second device is further configured to stop executing the task content based on the received second instruction. The first device is further configured to send a third instruction to the third device in response to the third input. The third device is configured to execute the task content according to the third input.

With reference to the third aspect, in a possible implementation, the first interface is a lock screen. The first device is configured to: in response to the first input, send the first instruction to the second device after detecting an unlock operation for the lock screen and being unlocked successfully.

With reference to the third aspect, in a possible implementation, the first message includes a task type of the task content. The first device is further configured to obtain device information of one or more devices within a communication range of the first device before displaying the first prompt window on the first interface. The first device is further configured to determine, based on the device information of the one or more devices within the communication range of the first device, one or more available devices that support the task type for execution of the task content. The available devices include the second device.

With reference to the third aspect, in a possible implementation, the first message includes a list of devices that support execution of the task content. The first device is further configured to obtain device information of one or more devices within a communication range of the first device before displaying the first prompt window on the first interface. The first device is further configured to determine one or more available devices from the device information of the one or more devices within the communication range of the first device based on the device list. The available devices include the second device.

With reference to the third aspect, in a possible implementation, the first device is further configured to determine an available device with a highest priority in the one or more available devices as the second device.

With reference to the third aspect, in a possible implementation, the first device is further configured to determine an available device that is in the one or more available devices and that is at a shortest physical distance from the first device as the second device.

With reference to the third aspect, in a possible implementation, the first prompt window further includes a fourth control. The fourth control is associated with one or more controls, and each of the one or more controls is associated with an available device other than the second device. The first device is further configured to: after displaying the first prompt window on the first interface, display the one or more controls when a fourth input for the fourth control is detected.

With reference to the third aspect, in a possible implementation, the one or more controls include a fifth control, and the fifth control is associated with a fifth device. The first device is further configured to: after displaying the first prompt window on the first interface, delete the fifth control when one or more devices within a communication range of the first device no longer include the fifth device. The first device is further configured to display one or more controls when detecting a fourth input for the fourth control, and the one or more controls do not include the fifth control.

With reference to the third aspect, in a possible implementation, the second device and the first device are a same device.

With reference to the third aspect, in a possible implementation, a same account or an associated account of a same account is logged in on the first device and the second device.

With reference to the third aspect, in a possible implementation, the first message includes email notification information, video application notification information, instant messaging message notification information, and video call notification information.

With reference to the third aspect, in a possible implementation, the first device is a mobile phone or a watch, and the second device is a computer, a tablet computer, or a television.

According to a fourth aspect, an embodiment of this application provides a computer storage medium, including computer instructions. When the computer instructions are run on an electronic device, the electronic device is enabled to perform the task processing method according to any possible implementation of any one of the foregoing aspects.

According to a fifth aspect, this application provides a chip system. The chip system is applied to an electronic device including a memory, a display, and a sensor, and the chip system includes one or more interface circuits and one or more processors. The interface circuit and the processor are interconnected through a line. The interface circuit is configured to receive a signal from the memory, and send the signal to the processor. The signal includes computer instructions stored in the memory. When the processor executes the computer instructions, the electronic device performs the task processing method according to any one of the first aspect or the possible implementations of the first aspect.

According to a sixth aspect, an embodiment of this application provides a computer program product. When the computer program product runs on a computer, the computer is enabled to perform the task processing method according to any one of the possible implementations of the first aspect.

It may be understood that the system according to the third aspect, the computer storage medium according to the fourth aspect, the chip system according to the fifth aspect, and the computer program product according to the sixth aspect are all configured to perform the task processing method according to the first aspect. Therefore, for beneficial effects that can be achieved by the system according to the third aspect, refer to the beneficial effects in the method according to the first aspect. Details are not described herein again.

### BRIEF DESCRIPTION OF DRAWINGS

FIG. 1 is a schematic diagram of a structure of an electronic device according to an embodiment of this application;
FIG. 2A and FIG. 2B are diagrams of network architectures of a task processing method according to an embodiment of this application;
FIG. 3 is a schematic diagram of a software architecture according to an embodiment of this application;
FIG. 4A to FIG. 4D are schematic diagrams of a group of interfaces according to an embodiment of this application;
FIG. 5A and FIG. 5B are schematic diagrams of another group of interfaces according to an embodiment of this application;
FIG. 6 is a schematic diagram of an interface according to an embodiment of this application;
FIG. 7A to FIG. 7F are schematic diagrams of still another group of interfaces according to an embodiment of this application;
FIG. 8A to FIG. 8F are schematic diagrams of yet another group of interfaces according to an embodiment of this application;
FIG. 9 is a schematic diagram of an interface according to an embodiment of this application;
FIG. 10A and FIG. 10B are schematic diagrams of still yet another group of interfaces according to an embodiment of this application;
FIG. 11 is a schematic flowchart of a task processing method according to an embodiment of this application;
FIG. 12 is a schematic diagram of a system of a task processing method according to an embodiment of this application;
FIG. 13 is a schematic diagram of a structure of an electronic device according to an embodiment of this application; and
FIG. 14 is a schematic diagram of a structure of a chip system according to an embodiment of this application.

### DESCRIPTION OF EMBODIMENTS

The technical solutions according to embodiments of this application are clearly and completely described in the following with reference to the accompanying drawings. In descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

Currently, notification design is based on a single device, and a notification of an application may be displayed in a status bar of an electronic device. A notification is used to notify a message notification of application software, and may automatically disappear after being fleetingly displayed while no user interaction is required, without user interaction, for example, a notification indicating a new message in the status bar, or a notification used for web page recommendation. A notification further includes a notification of an application running in the background, or may be a notification displayed on a display in a form of a dialog window. A user taps the notification on the display of the electronic device, and the electronic device jumps to an application associated with the notification. In these cases, the electronic device always processes notification information on one device.

In a general life scenario, when a user chats with a friend by using chat software on a mobile phone, if a notification is displayed on a display of the electronic device, and content of the notification is that video software updates a new video. If the user wants to watch the new video, the user can only switch a chat interface to a video playing interface of the video software, and cannot use the chat software while watching the video.

An embodiment of this application provides a task processing method. According to the task processing method, an electronic device may display related content in a notification on another device. For example, when a user chats with a friend by using chat software on a mobile phone, if a notification is displayed on a display of the electronic device, content of the notification is "A new video is updated in Youku", and the notification includes a control that triggers a television for watching the video, the user may trigger the control, so that the television plays the video. In this way, the user can use the two devices to display different content at the same time, and use the chat software while watching the video.

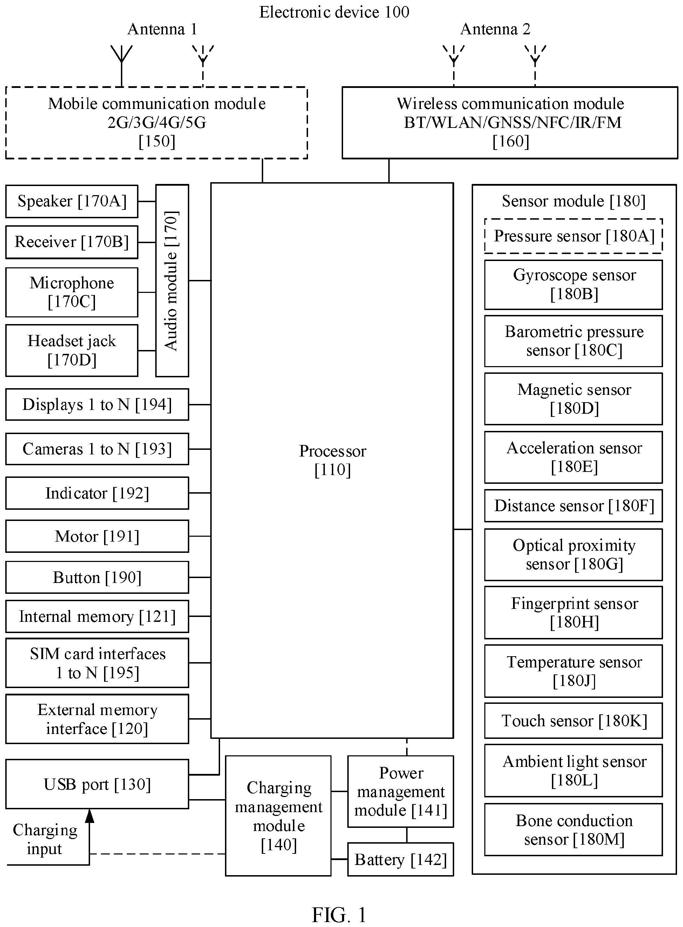

FIG. 1 is a schematic diagram of a structure of an electronic device 100.

The electronic device 100 is used as an example below to describe embodiments in detail. It should be understood that the electronic device 100 shown in FIG. 1 is merely an example, and the electronic device 100 may have more or fewer components than those shown in FIG. 1, or may combine two or more components, or may have different component configurations. Various components shown in the figure may be implemented in hardware, software, or a combination of hardware and software that includes one or more signal processing and/or application-specific integrated circuits.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In other embodiments of this application, the electronic device 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate devices, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store an instruction or data that has been used or cyclically used by the processor 110. If the processor 110 needs to use the instructions or the data again, the processor may directly invoke the instructions or the data from the memory. This avoids repeated access and reduces waiting time of the processor 110, so that system efficiency is improved.

The charging management module 140 is configured to receive charging input from a charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communications frequency bands. Different antennas may be further multiplexed, to improve antenna utilization. For example, the antenna 1 may be multiplexed as a diversity antenna of a wireless local area network. In other embodiments, the antenna may be used in combination with a timing switch.

The mobile communications module 150 may provide a wireless communication solution that includes 2G/3G/4G/5G or the like and that is applied to the electronic device 100. The mobile communications module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communications module 150 may be disposed in the processor 110. In some embodiments, at least some functional modules of the mobile communications module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communications module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

In some embodiments, a Bluetooth (BT) module and a WLAN module included in the wireless communications module 160 may transmit a signal to detect or scan a device near the electronic device 100, so that the electronic device 100 can find a nearby device by using a wireless communications technology such as Bluetooth or a WLAN, establish a wireless communication connection to the nearby device, and share data with the nearby device by using the connection. The Bluetooth (BT) module may provide a Bluetooth communication solution including one or more of classic Bluetooth (Bluetooth 2.1) or Bluetooth low energy (Bluetooth low energy, BLE). The WLAN module may provide a WLAN communication solution including one or more of Wi-Fi direct, a Wi-Fi LAN, or Wi-Fi SoftAP.

In some embodiments, the wireless communication solution provided by the mobile communications module 150 may enable the electronic device to communicate with a device (for example, a server) in a network, and the WLAN wireless communication solution provided by the wireless communications module 160 may also enable the electronic device to communicate with a device (for example, a server) in a network, and to communicate with a cloud device by using the device (for example, the server) in the network. In this way, the electronic device can find the cloud device and transmit data to the cloud device.

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal. In addition to the digital image signal, the digital signal processor may further process another digital signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "horn", is configured to convert an electrical audio signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB port 130, or may be a 3.5 mm open mobile terminal platform (open mobile terminal platform, OMTP) standard interface or Cellular Telecommunications Industry Association of the USA (Cellular Telecommunications Industry Association of the USA, CTIA) standard interface.

The pressure sensor 180A is configured to sense a pressure signal, and can convert the pressure signal into an electrical signal.

The gyroscope sensor 180B may be configured to determine a motion posture of the electronic device 100.

The barometric pressure sensor 180C is configured to measure barometric pressure.

The magnetic sensor 180D includes a Hall effect sensor. The electronic device 100 may detect opening and closing of a flip cover by using the magnetic sensor 180D.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and used in an application such as switching between a landscape mode and a portrait mode or a pedometer.

The distance sensor 180F is configured to measure a distance. The electronic device 100 may measure the distance in an infrared manner or a laser manner.

The optical proximity sensor 180G may include, for example, a light emitting diode (LED) and an optical detector, for example, a photodiode. The light emitting diode may be an infrared light emitting diode. The electronic device 100 emits infrared light by using the light emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a leather case mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature.

The touch sensor 180K is also referred to as a touch panel. The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor 180K may also be disposed on a surface of the electronic device 100 at a location different from that of the display 194.

The bone conduction sensor 180M may obtain a vibration signal.

The button 190 includes a power button, a volume button, and the like. The button 190 may be a mechanical button, or may be a touch-sensitive button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

The following describes two network architectures provided in embodiments of this application.

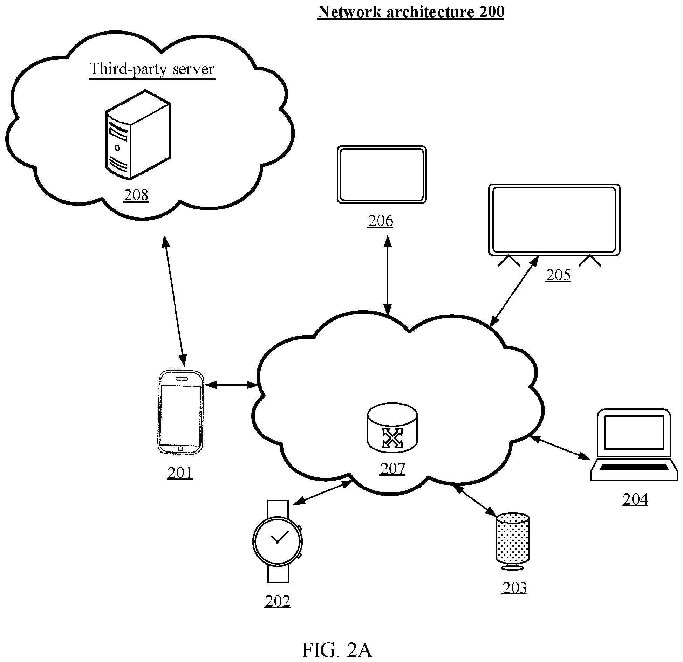

FIG. 2A is a schematic diagram of a network architecture 200 according to an embodiment of this application. The network architecture 200 includes a plurality of electronic devices. The electronic device may include a smartphone 201, a smartwatch 202, a smart speaker 203, a personal computer 204, a smart television 205, a tablet computer 206, and the like. This is not limited in this embodiment of this application. The electronic devices may communicate with each other. The plurality of electronic devices may be connected to a local area network (local area network, LAN) in a wired manner or a wireless fidelity (wireless fidelity, Wi-Fi) connection manner, or may perform communication by using a mobile network or the Internet.

For example, when an environment in which the network architecture 200 is located is a domestic environment or the like, the plurality of electronic devices may be located in a same local area network. As shown in 2A, the network architecture 200 may further include a router 207. The router 207 may be set as an access point (access point, AP) to provide a signal source of a network. Further, each electronic device in the network architecture 200 may access the router 207 as a station (station, STA). The router 207 may separately communicate with each electronic device in a wired network manner or a wireless network manner. For example, a Wi-Fi link is established between the electronic devices by using a wireless fidelity (wireless fidelity, Wi-Fi) protocol, to implement communication between devices. A specific implementation may be that a peer-to-peer (peer-to-peer, P2P) connection (or referred to as Wi-Fi direct (Wi-Fi Direct)) is established between the electronic devices, or the electronic devices separately access the same router 207, to implement communication between the devices.

Optionally, alternatively, a Bluetooth link may be established between the devices by using a Bluetooth protocol, to implement communication between the devices based on the Bluetooth link, or the electronic devices may be interconnected by using a cellular network, or the electronic devices may be interconnected by using a switching device (for example, a USB data cable or a dock device), to implement a communication function between the electronic devices. This is not limited in this embodiment of this application.

In a possible implementation, the network architecture 200 further includes a third-party server 208. The third-party server 208 may be a server of third-party application software, and is connected to the electronic device through a network. The third-party server 208 sends notification information to the electronic device, and the electronic device displays prompt information on a display interface based on the notification information. A quantity of third-party servers 208 is not limited to one, and there may be a plurality of third-party servers 208. This is not limited herein.

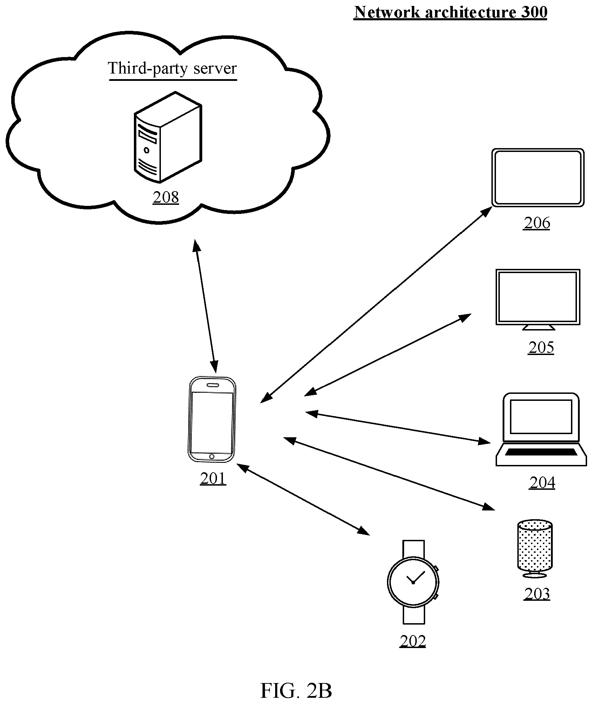

FIG. 2B is a schematic diagram of a network architecture 300 according to an embodiment of this application. The network architecture 200 includes a plurality of electronic devices. The electronic device may include a smartphone 201, a smartwatch 202, a smart speaker 203, a personal computer 204, a smart television 205, a tablet computer 206, and the like. This is not limited in this embodiment of this application. There is a central device, for example, the smart phone 201, between the plurality of electronic devices. A Wi-Fi P2P GO (Group Owner) is created on the central device, and other devices are connected to the GO as P2P GCs (Group Clients). In this way, these devices form a one-to-many network and can communicate with each other.

In a possible implementation, the network architecture further includes a third-party server 208. The third-party server 208 may be a server of third-party application software, and is connected to the smartphone 201 through a network. The third-party server 208 sends notification information to the smartphone 201, and the smartphone 201 displays prompt information on a display interface based on the notification information. A quantity of third-party servers 208 is not limited to one, and there may be a plurality of third-party servers 208. This is not limited herein.

In this embodiment of this application, an electronic device that displays prompt information may be referred to as a first device, and an electronic device that executes content in the prompt information may be referred to as a second device. For example, the first device is a smartphone 201. The smartphone 201 is connected to and communicates with the smartwatch 202, the smart speaker 203, the personal computer 204, the smart television 205, and the tablet computer 206. The third-party server 208 is connected to the smartphone 201 through the network.

The smartphone 201 obtains notification information sent by the third-party server 208 or generated by a system application (for example, Messages or Alarm clock) of the smartphone 201, and displays prompt information on a display interface based on the notification information. The prompt information includes a plurality of controls. One of the plurality of controls may be associated with one electronic device, and the control is used to trigger the electronic device to execute a task in the prompt information. Alternatively, one of the plurality of controls may be associated with one or more controls, each of the one or more controls is associated with one electronic device, and each control is used to trigger a corresponding electronic device to execute a task in the prompt information.

Content of the prompt information includes one or more pieces of multimedia data, and the multimedia data may include one or any combination of the following: text data, image data, animation data, audio data, or video data.

For example, various types of multimedia data may be generated when a user uses various APPs in a mobile phone. For example, when a video APP is run, the mobile phone may display video data to the user; when a music APP is run, the mobile phone may play audio data to the user; and when a browser APP is run, the mobile phone may display data such as a text and a picture to the user.

For structures of the electronic devices in the network architecture 200 and the network architecture 300, refer to the electronic device 100 shown in FIG. 1. Details are not described herein again.

A software system of the electronic device 100 may use a layered architecture, an event-driven architecture, a microkernel architecture, a micro service architecture, or a cloud architecture. In this embodiment of the present invention, an Android system of a layered architecture is used as an example to illustrate the software structure of the electronic device 100.

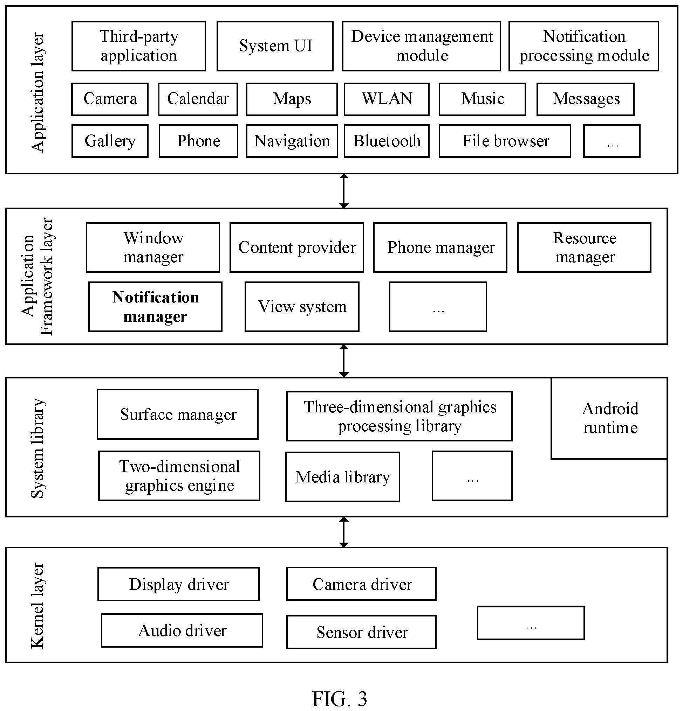

FIG. 3 is a block diagram of a software structure of the electronic device 100 according to an embodiment of the present invention.

In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 3, the application packages may include applications such as Camera, Gallery, Calendar, Phone, Maps, Navigation, WLAN, Bluetooth, Music, Videos, and Messages. The application packages may further include a third-party application, for example, an application such as Youku or WeChat.

In this embodiment of this application, the application layer includes a system interface (system UI). The system UI controls an interface of an entire system, and the system UI is also an application. However, the system UI cannot be uninstalled or replaced by a third-party application. The system UI includes a status bar (status bar) on the upper part of the system interface, a navigation bar (Navigation Bar) on the lower part of the system interface, a lock screen (Keyguard), a power interface (Power UI), and a recent task (Recent Task) interface.

The application framework layer provides an application programming interface (application programming interface, API) and a programming framework for an application at the application layer. The application framework layer includes some predefined functions.

As shown in FIG. 3, the application framework layer may include a window manager (window manager), a content provider, a view system, a phone manager, a resource manager, a notification manager, and the like.

The window manager is configured to manage a window program. The window manager may obtain a size of the display, determine whether there is a status bar, lock the display, take a screenshot of a display, and the like.

The content provider is configured to store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including a notification icon of Messages may include a text display view and an image display view.

The phone manager is configured to provide a communication function of the electronic device 100, for example, management of a call status (including answering, declining, or the like).

The resource manager provides various resources such as a localized character string, an icon, a picture, a layout file, and a video file for an application.

The notification manager enables an application to display notification information in the status bar, and may be configured to convey a notification message. The notification manager may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application running in the background, or may be a notification that appears on the display in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes working procedures of software and hardware of the electronic device 100 as examples with reference to a notification display scenario.

The application layer invokes an interface of the application framework layer to send notification information to the notification manager. When obtaining the notification information, the notification manager further processes the notification information, then starts the display driver by invoking a kernel layer, and outputs a final notification through the display.

In this embodiment of this application, the application layer may further include a device management module and a notification processing module, and the system UI at the application layer may include a notification presentation module. The notification processing module obtains the notification information from the notification manager at the application framework layer, obtains device information from the device management module, generates final notification information, and sends the final notification information to the notification presentation module. The notification presentation module displays the final notification. It may be understood that a division manner of the function modules in embodiments of this application is merely an example, and does not limit technical implementation of embodiments of this application. Specifically,
the device management module is configured to find and record a device that has a connection relationship with the electronic device 100 and device information. The device information includes a device identifier (for example, a name of the device and/or a MAC address of the device), a device attribute (for example, a display capability of the device, an audio capability of the device, and an interaction capability of the device), a current status of the device (for example, the device is turned on or off, a screen is turned off or on, whether the device is worn on a user, a distance between the device and the electronic device 100), priority information of the device, and the like.

In some embodiments, when devices in the network architecture 200 are connected to a same AP to constitute a local area network, the devices in the network architecture 200 are surrounding devices of each other, or the devices in the network architecture 200 are neighboring devices of each other. A device management module 102 of a device in the network architecture 200 may find all other online devices in the same AP, and all the online devices (including the device and the other devices in the network architecture 200) in the same AP complete networking. For example, the smartphone 201, the smartwatch 202, the smart speaker 203, the personal computer 204, the smart television 205, and the tablet computer 206 are surrounding devices (nearby devices) of each other. A device management module of the smartphone 201 records device information of the smartwatch 202, the smart speaker 203, the personal computer 204, the smart television 205, and the tablet computer 206.

Optionally, the device and the device information in the device management module are not lost due to a network disconnection. Further, optionally, the device and the device information in the device management module are not lost within a preset time period, for example, within one month.

In some embodiments, a device management module 102 of a device in the network architecture 200 finds that, in other online devices in a local area network of a same AP, an account that is logged in on one or more other devices is an account of the device, or an account that is logged in on one or more other devices is an associated account of an account that is logged in on the device. In this case, another device on which the account or the associated account is logged in is a device trusted by the device, or all devices on which the account or the associated account is logged in are trusted devices of each other. The devices on which the account or the associated account is logged in and that are connected to the same AP complete networking, and trusted devices can obtain information about each other. This ensures information security and privacy.

In some embodiments, when the devices in the network architecture 200 communicate with each other through a mobile network or the Internet, the device management module 102 may find, through the mobile network or the Internet, that accounts that are logged in on some devices in the network architecture 200 are a same account or associated accounts. In addition, when the devices are located near the user, and the devices complete networking, the devices are trusted devices of each other. The trusted devices may obtain device information of each other, to ensure security and privacy of notifications. The associated account may be an account authorized by a same account.

Specifically, a distance between the devices and a distance between the user and each device may be determined through Bluetooth received signal strength indication (Received Signal Strength Indication, RSSI) ranging or satellite positioning. The device management module 102 may find a device near the user in the network architecture 200, and may increase an interaction capability and a collaboration capability between the devices, to avoid the user from manually searching for and screening the device in the network architecture 200, so as to reduce user operations and improve efficiency.

The foregoing account may be an account provided by a cloud service provider for the user, for example, a Huawei account or an Apple ID (Apple ID), or may be an account used to log in to an application, for example, a WeChat account or a Tencent account.

In some embodiments, when the devices in the network architecture 200 communicate with each other through the mobile network or the Internet, the devices in the network architecture 200 perform identity authentication according to a preset rule, and determine that the devices are trusted devices of each other after the authentication succeeds. For example, the smart television 205 outputs a two-dimensional code on a display. After the smartphone 201 scans the two-dimensional code to perform user authorization, the smart television 205 and the smartphone 201 are trusted devices of each other. Alternatively, the smart television 205 and the smartphone 201 have same application software, and the smartphone 201 obtains the associable smart television 205 from the application software. After user authorization, the smart television 205 and the smartphone 201 are trusted devices of each other. Trusted devices can obtain information about each other.

In some embodiments, when the central device (for example, the smartphone 201) in the network architecture 300 is connected to other devices, the central device and all devices that are successfully connected are trusted devices of each other. A device management module of the central device may obtain device information of a device trusted by the central device.

The notification processing module is configured to parse obtained notification information, generate a finally displayed notification, and send the finally displayed notification to the notification presentation module. Optionally, one or more pieces of application software (for example, a third-party application and a system application) are installed in the electronic device 100. When a specified event is met, the application software generates a notification, and sends the notification to the notification processing module. Alternatively, the notification is generated by a system of the electronic device 100. When detecting that a specified event is met, the system generates a notification, for example, a message notification or a memo notification.

In this embodiment of this application, the notification processing module associates the notification information with a device identifier with reference to the device information in the device management module, and determines, according to a preset rule, the device identifier corresponding to a device that executes a task of the notification information. The electronic device 100 displays a final notification, and may trigger, based on the finally displayed notification, the corresponding device to execute the task in the notification.

The notification presentation module receives the notification sent by the notification processing module, and displays the notification on a display interface of the electronic device 100 according to a notification style template.

To following uses an example in which the smartphone 201 is the foregoing electronic device to first describe an implementation form of a notification provided in this embodiment of this application on the display interface of the smartphone 201.

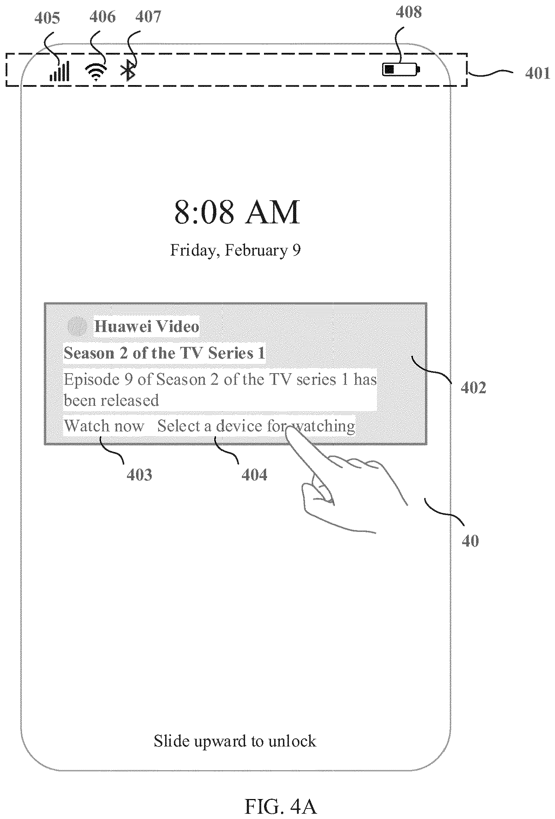

FIG. 4A shows an example of a lock screen 40. The lock screen 40 includes a status bar 401 and a notification bar 402.

The status bar 201 may include one or more signal strength indicators 405 of a mobile communication signal (which may also be referred to as a cellular signal), one or more signal strength indicators 406 of a wireless fidelity (wireless fidelity, Wi-Fi) signal, a Bluetooth indicator 407, and a battery status indicator 408. When a Bluetooth module of an electronic device is in an enabled state (that is, the electronic device supplies power to the Bluetooth module), the Bluetooth indicator 407 is displayed on a display interface of the electronic device.

A notification provided in this embodiment of this application is displayed in the notification bar 402. Notification content of the notification describes a source (for example, Huawei Video) of the notification and brief content (which is that a new video is released, for example, Episode 9 of Season 2 of a TV series 1 has been released) of the notification. The notification in the notification bar 402 further includes a control 403 and a control 404. For example, the control 403 is "Watch now", and the control 404 is "Select a device for watching". When detecting a user operation for the control 403, the electronic device performs an operation described on the control 403, that is, the electronic device immediately jumps to a video playing interface after being unlocked, that is, immediately plays Episode 9 of Season 2 of the TV series 1.

As shown in 4B, when detecting a user operation for the control 404, the electronic device performs an operation described on the control 404, and the electronic device displays a window 4041. The window 4041 includes selectable devices, for example, devices such as a living room TV, a bedroom TV, a speaker, and a computer. A user selects a video playing device in the window 4041. For example, the user selects the living room TV In this case, the living room TV jumps to a video playing interface, and immediately plays Episode 9 of Season 2 of the TV series 1. The devices in the window 4041 may be arranged according to priorities, may be arranged according to signal strength of the devices, or may be randomly arranged. This is not limited in this application.

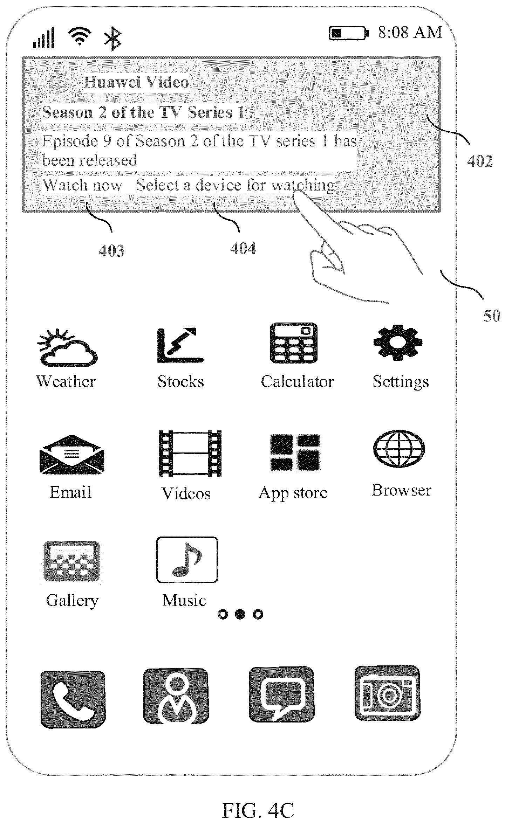

FIG. 4C shows an example of an unlocked user interface 50. A plurality of application icons, for example, Settings, Email, Videos, and Gallery, are displayed on a user interface 50. The notification bar 402 is displayed at the top of the user interface 50, and the electronic device displays, in the notification bar 402, a notification provided in this embodiment of this application. When detecting a user operation for the control 403, the electronic device performs an operation described on the control 403, that is, the electronic device immediately jumps to a video playing interface.

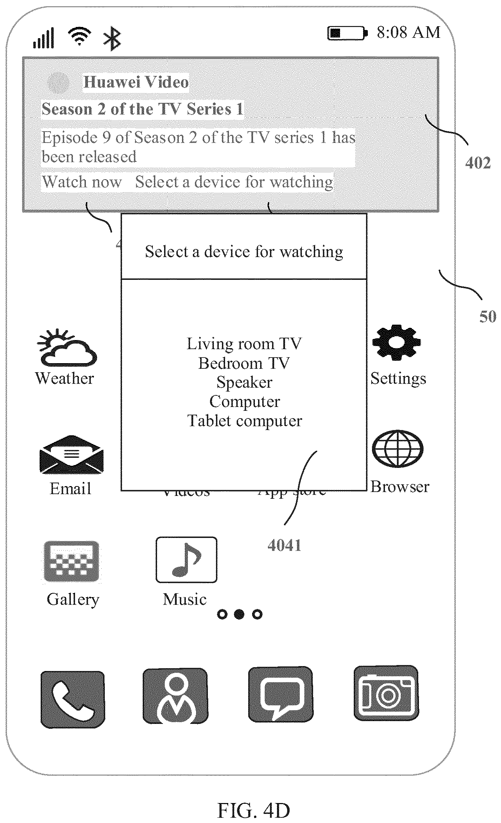

As shown in FIG. 4D, when detecting a user operation for the control 404, the electronic device performs an operation described on the control 404, and the electronic device displays the window 4041. In FIG. 4D, the window 4041 includes selectable devices, for example, devices such as a living room TV, a bedroom TV, a speaker, and a computer. The user selects a video playing device in the window 4041. In this case, the device jumps to a video playing interface.

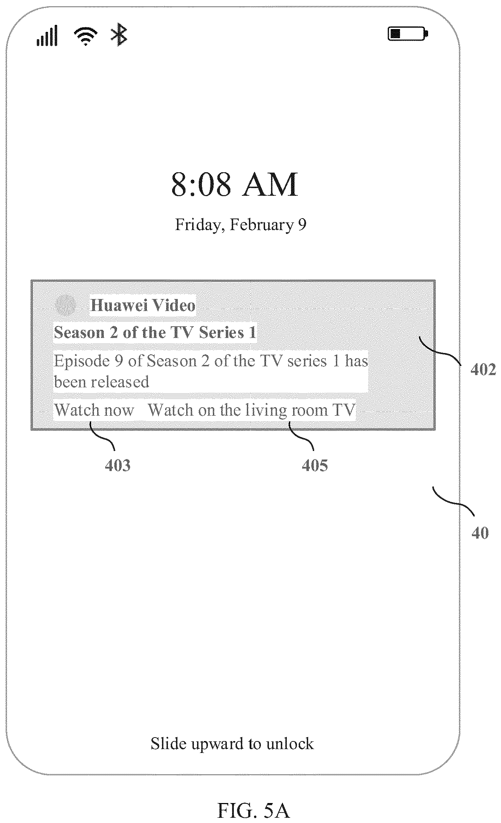

In some embodiments, on the lock screen 40, the notification in the notification bar 402 may further include different controls. As shown in FIG. 5A, the notification in the notification bar 402 may further include a control 405. Compared with the control 404 displayed in FIG. 4A, the control 405 recommends only one device to the user, for example, "View on the living room TV". When detecting a user operation for the control 405, the electronic device performs an operation described on the control 405, and sends a request message to the living room TV The living room TV plays related content in the notification. The device indicated on the control 405 may be a device with a highest priority, may be a device closest to the electronic device, or may be a device with highest resolution (highest image quality) in a device attribute, so that the user does not need to select from a plurality of devices. This improves user experience.

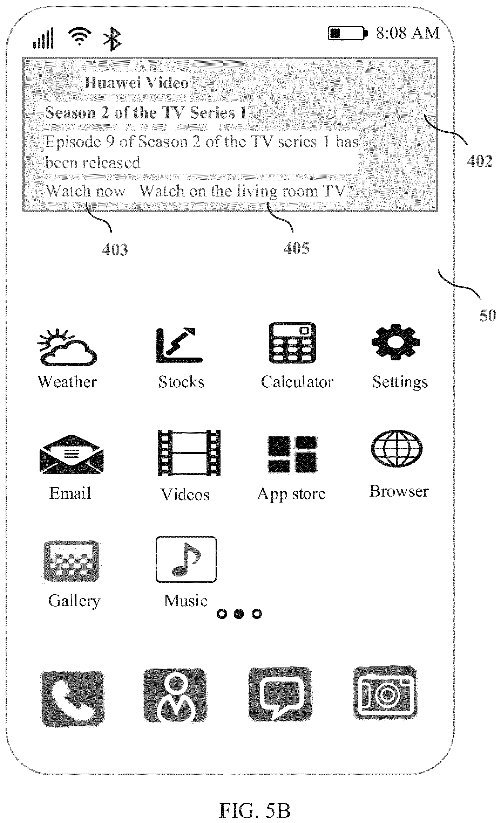

Similarly, as shown in FIG. 5B, in the unlocked user interface 50, the notification in the notification bar 402 further includes a control 405. When detecting a user operation for the control 405, the electronic device sends a request message to the living room TV The living room TV plays related content in the notification.

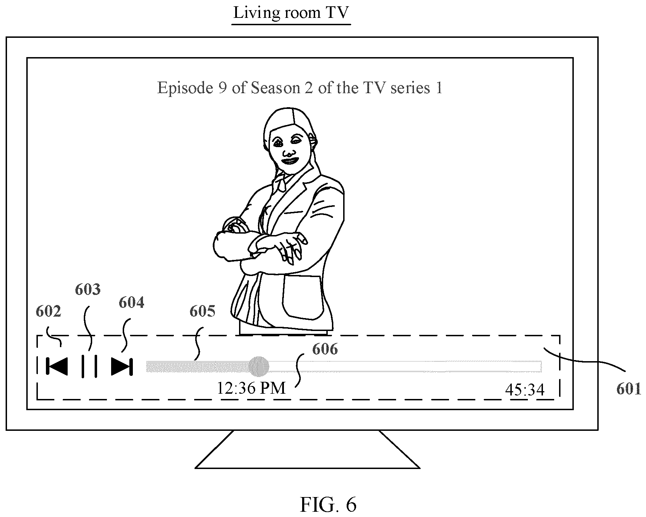

For example, as shown in FIG. 6, if the user selects the living room TV in the window 4041 for playing, or the user triggers the control 405, the electronic device sends a request message to the living room TV in response to the user operation. The living room TV plays related content in the notification, namely, Episode 9 of Season 2 of a TV series 1, in response to the request message. A function bar 601 may be further included in FIG. 6. The function bar 601 includes a back control 602, a playing control 603, a fast-forward control 604, a progress bar 605, and a time progress value 606. The progress bar 605 indicates video playing progress. A longer progress bar 605 indicates a larger time progress value 606. The back control 602 is used to control the video playing progress to trace back. When the living room TV detects a user operation of triggering the back control 602, a length of the progress bar 605 becomes shorter. The fast-forward control 604 is used to control the video playing progress to move forward. When the living room TV detects a user operation of triggering the back control 602, a length of the progress bar 605 becomes longer. The playing control 603 is used to control starting playing and stopping playing of a video.

Optionally, the notification in the notification bar 402 may further include a control, for example, "View later" or "View later on the living room TV". When the electronic device detects a user operation for the "View later" control or the "View later on the living room TV" control, the electronic device outputs the notification again on a display after preset duration. Optionally, the electronic device recognizes that the electronic device has no network connection to the living room TV, and may display the "View later on the living room TV" control to the user in the notification. The electronic device detects a user operation for the "View later on the living room TV" control. After establishing a network connection to the living room TV, the electronic device sends a request message to the living room TV, and the living room TV plays related content in the notification.

Optionally, a control may be associated with time information. For example, the notification in the notification bar 402 may further include a control, for example, "View five minutes later" or "View on the living room TV five minutes later". When the electronic device detects a user operation for the "View five minutes later" control, the electronic device plays related content in the notification five minutes later. When the electronic device detects a user operation for the "View on the living room TV five minutes later" control, the electronic device sends a request message to the living room TV five minutes later, and the living room TV plays related content in the notification. Optionally, when the electronic device detects a user operation for the "View on the living room TV five minutes later" control, the electronic device sends a request message to the living room TV, and the living room TV plays related content in the notification five minutes later.

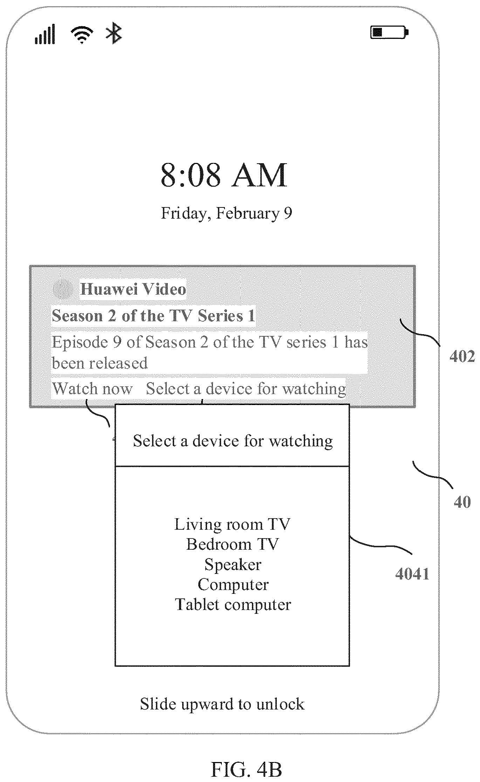

On the user interfaces 50 shown in FIG. 4B and FIG. 5B, the notification bar 402 may automatically disappear after being displayed on the user interface 50 for a short period of time, without user interaction. If the user does not process the notification in time, the notification bar 402 automatically disappears or hides. When the user wants to process the notification information again, the user may access a notification center interface to view an unprocessed notification.

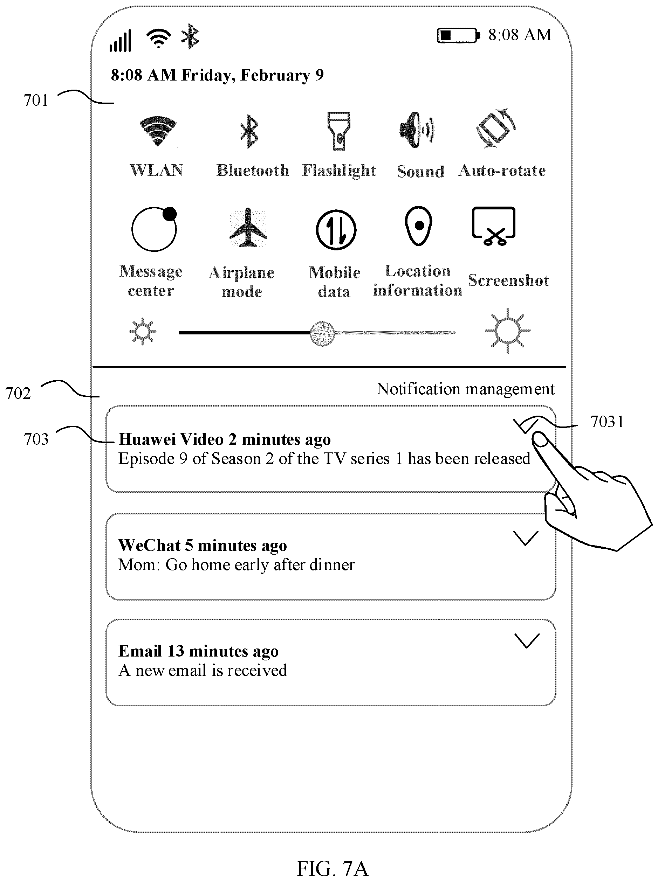

FIG. 7A shows an example of a notification center interface. The notification center interface includes an area 701 and an area 702. A plurality of on/off controls, for example, Bluetooth, Flashlight, and Airplane mode, are displayed in the area 701. A plurality of notification bars are displayed in the area 702, for example, a notification bar 703 includes the source (video software) of the notification, a time point (two minutes ago) of the notification, and the brief content (which is that Episode 9 of Season 2 of the TV series 1 has been released) of the notification. The notification bar 703 further includes an icon 7031. The electronic device detects a user operation for the icon 7031, and expands the notification bar 703 to display one or more controls.

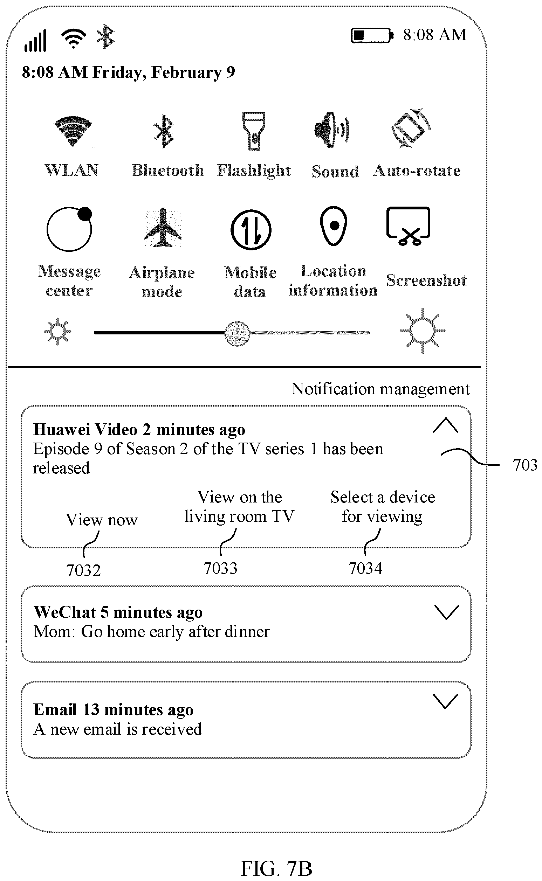

For example, as shown in FIG. 7B, a "View now" control 7032, a "View on the living room TV" control 7033, and a "Select a device for viewing" control 7034 are included. For descriptions of the control 7032 to the control 7034, refer to the related descriptions of the control 403 to the control 405. The icon 7031 is optional, and all controls may be directly displayed in the notification bar 703, as shown in FIG. 7B, without triggering the icon 7031. A device indicated on the control 7033 may be a device with a highest priority, may be a device closest to the electronic device, or may be a device with highest resolution (highest image quality) in a device attribute, so that the user does not need to select from a plurality of devices. This improves user experience. The control 7034 further includes one or more selectable electronic devices that are provided for the user to freely select, to improve user experience.

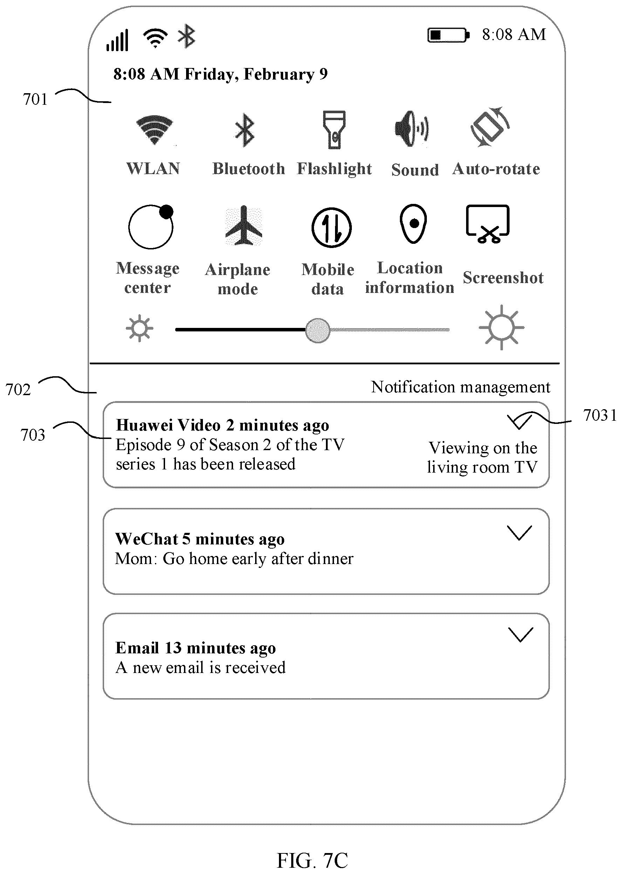

On the notification center interface, when detecting a user operation for the control 7033, the electronic device performs an operation described on the control 7033. To be specific, the electronic device sends a request message to the living room TV The living room TV plays related content in the notification, namely, Episode 9 of Season 2 of the TV series 1, in response to the request message. In this case, the notification bar 703 does not disappear, and the user may continue to process the notification on the electronic device. As shown in FIG. 7C, state information "Being viewed on the living room TV" is displayed in the notification bar 703, indicating that the notification in the notification bar 703 is being processed on the living room TV at this time.

When detecting a user operation for the icon 7031, the electronic device expands the notification bar 703 to display one or more controls.

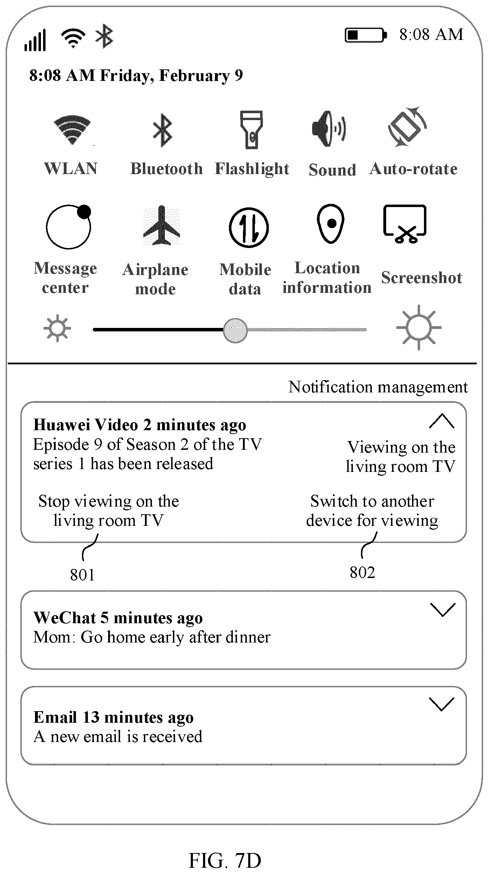

For example, as shown in FIG. 7D, a "Stop viewing on the living room TV" control 801 and a "Switch to a device for viewing" 802 are included. When detecting a user operation for the control 801, the electronic device performs an operation described on the control 801. To be specific, the electronic device sends a request message to the living room TV The living room TV stops playing related content in the notification.

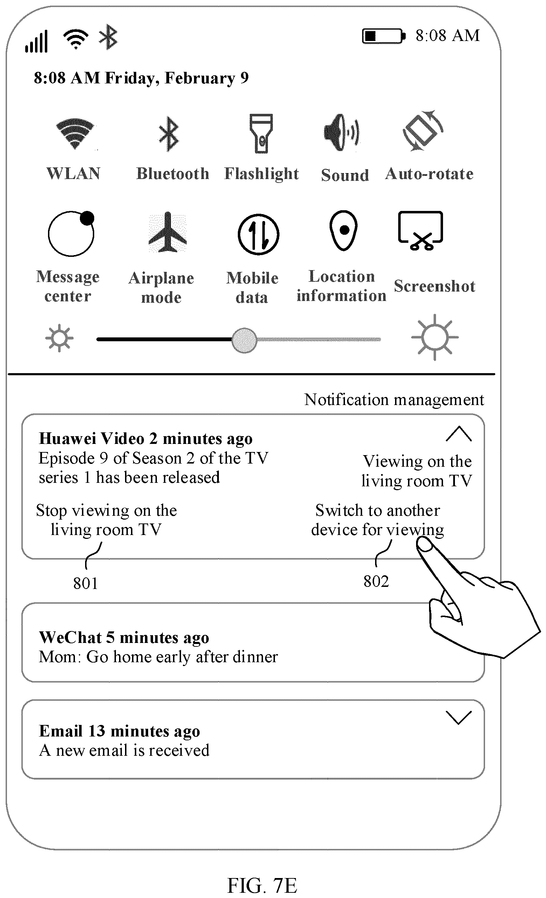

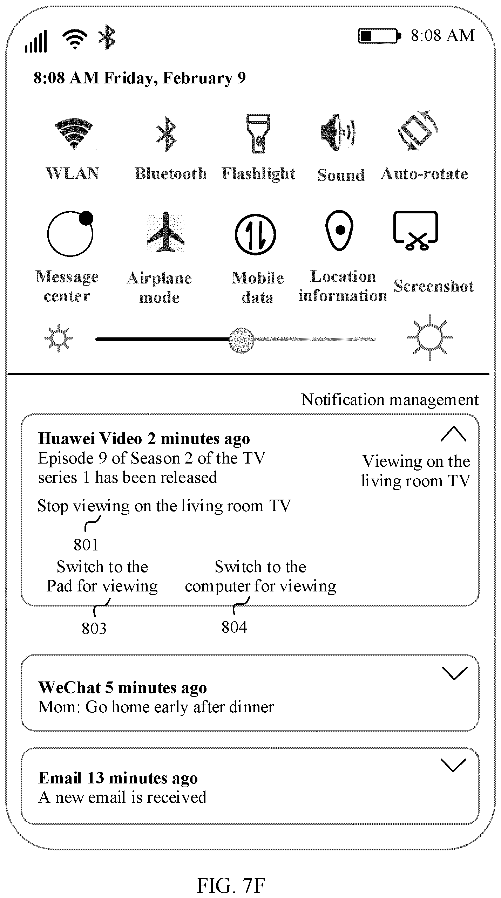

As shown in FIG. 7E, when detecting a user operation for the control 802, the electronic device performs an operation described on the control 802, and the electronic device displays a list of switchable devices, for example, devices such as a computer and a Pad. As shown in FIG. 7F, the electronic device displays a "Switch to the Pad for viewing" control 803 and a "Switch to the computer for viewing" control 804. The user selects, from the list of switchable devices, a device for switching to view. When detecting a user operation for the control 804, the electronic device performs an operation described on the control 804. In this case, the electronic device sends a request message to the living room TV, and the living room TV stops playing related content in the notification. In addition, the electronic device sends a request message to the computer, and the computer starts to play the related content in the notification.

In some embodiments, FIG. 7C is optional. On the notification center interface shown in FIG. 7B, after detecting a user operation of processing the notification in the notification bar 703, the electronic device displays an interface shown in FIG. 7D.

In some embodiments, FIG. 7D and FIG. 7E are optional. On the notification center interface shown in FIG. 7C, after detecting a user operation for the control 7031, the electronic device displays an interface shown in FIG. 7F.

In some embodiments, FIG. 7C, FIG. 7D, and FIG. 7E are optional. On the notification center interface shown in FIG. 7B, after detecting a user operation of processing the notification in the notification bar 703, the electronic device displays an interface shown in FIG. 7F.

In some embodiments, a control in the notification may change based on a change of a device status. The electronic device outputs notification information. The notification information includes a control, and the control is associated with a target device. The target device is within a communication range of the electronic device, and the control is used to trigger the target device to execute a task in the notification information. Before the electronic device detects a user operation for the control, the electronic device detects that the target device is not within the communication range of the electronic device. For example, the target device is turned off or disconnected from a network. In this case, the electronic device changes the control in the notification information, so that the control is associated with another device, to trigger the another device to execute the task in the notification information.

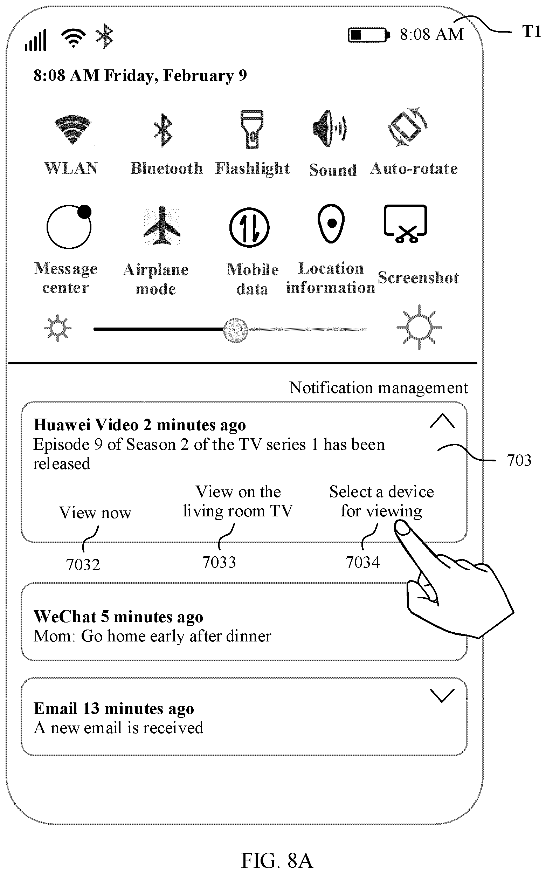

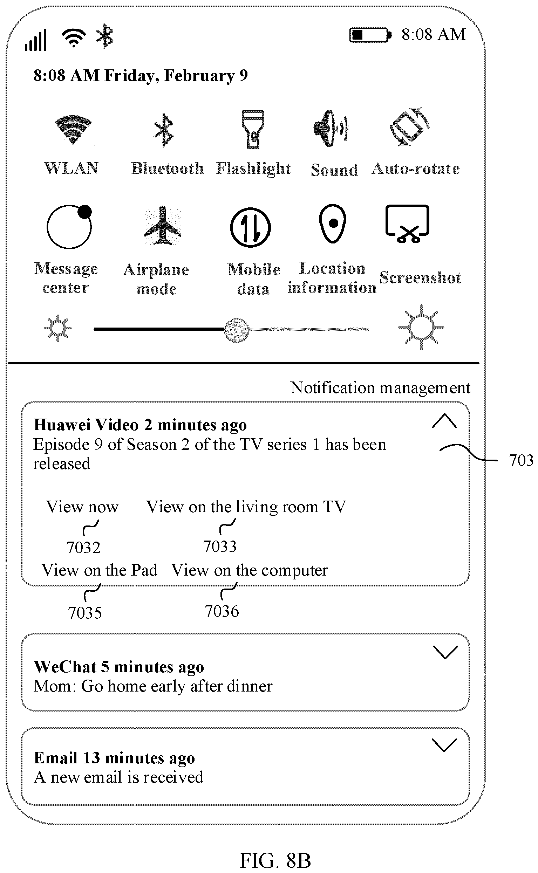

For example, as shown in FIG. 8A, at a moment TI (08:08), the notification bar 703 outputs notification information. For descriptions of FIG. 8A, refer to the related descriptions in FIG. 7B. Details are not described herein again. As shown in FIG. 8B, when the electronic device detects a user operation for a "Select a device for viewing" control 7034, the notification bar 703 is expanded to display a "View on the Pad" control 7035 and a " View on the computer" control 7036, to prompt the user to select the Pad and the computer for viewing.

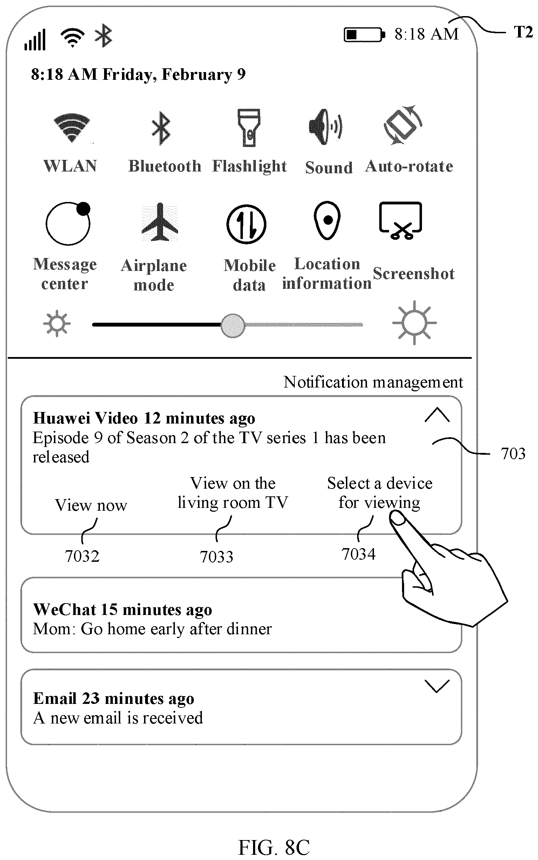

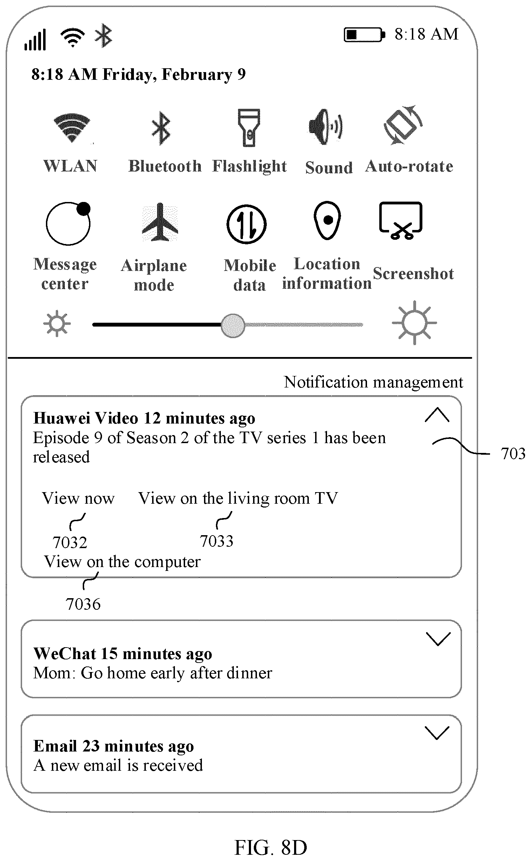

As shown in FIG. 8C, at a moment T2 (08:18), the electronic device detects that the Pad is not within the communication range of the electronic device. In this case, the electronic device updates the notification bar 703. In this case, the notification bar 703 includes a control 7032, a control 7033, and a control 7034. When the electronic device detects a user operation for the "Select a device for viewing" control 7034, as shown in FIG. 8D, the notification bar 703 is expanded to display the "View on the computer" control 7036, to prompt the user to select the computer for viewing.

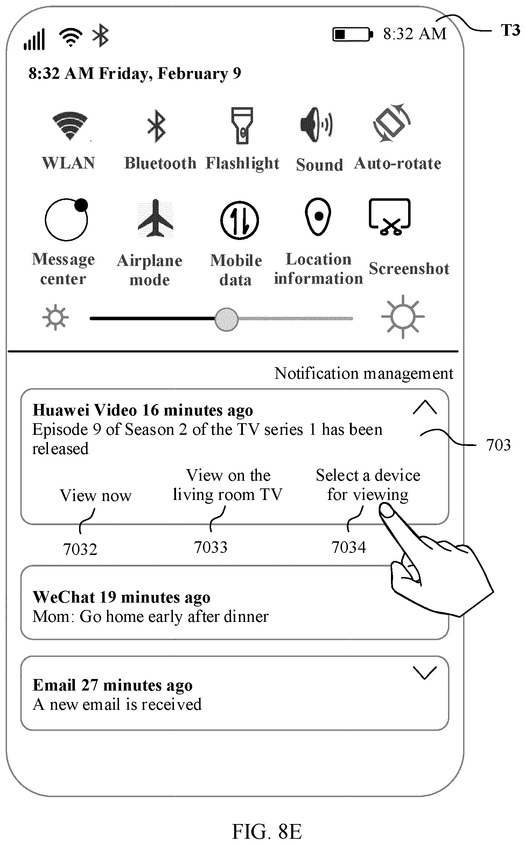

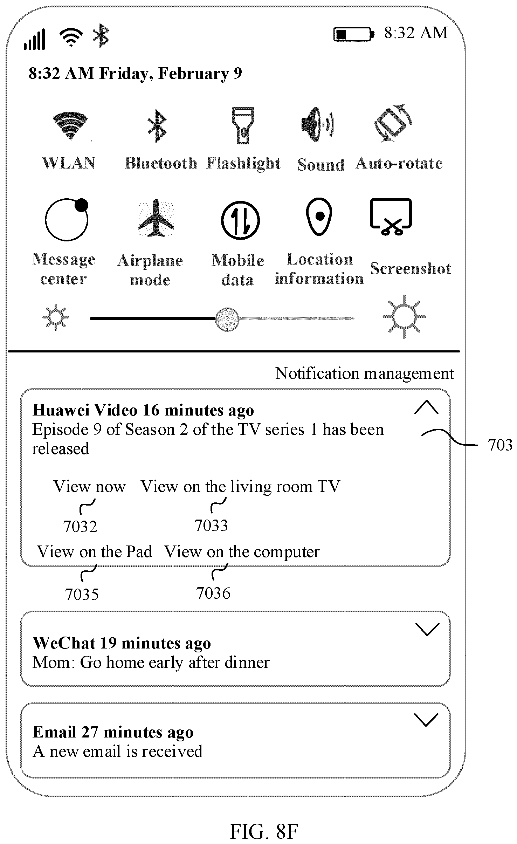

As shown in FIG. 8E, at a moment T3 (08:32), the electronic device detects that the Pad is within the communication range of the electronic device. In this case, the electronic device updates the notification bar 703. In this case, the notification bar 703 includes a control 7032, a control 7033, and a control 7034. When the electronic device detects a user operation for a "Select a device for viewing" control 7034, as shown in FIG. 8F, the notification bar 703 is expanded to display a "View on the Pad" control 7035 and a " View on the computer" control 7036, to prompt the user to select the Pad and the computer for viewing.

In some embodiments, the following describes a specific application scenario in embodiments of this application by using an example in which the smartwatch 202 is the foregoing electronic device.

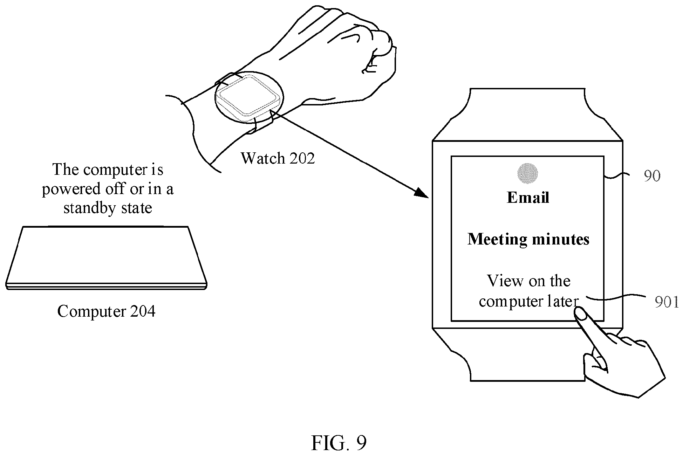

As shown in FIG. 9, a computer 204 is in a power-off state (a state in which there is no network connection) or a standby state. The smartwatch 202 does not have a function or permission to view an email. When the smartwatch 202 receives notification information from an email application, because the computer is in the power-off state or the standby state at this time, prompt information 90 is displayed on a display interface of the smartwatch 202. The prompt information 90 includes a new email notification reminder and a control 901, and the control 901 is "View later on the computer". The smartwatch 202 detects a user operation for the control 901, and performs an operation described on the control 901. When detecting that the computer is in a power-on state, the smartwatch 202 sends an execution message to the computer. After the computer receives the execution message, the computer displays an email prompt box or directly opens a corresponding email.

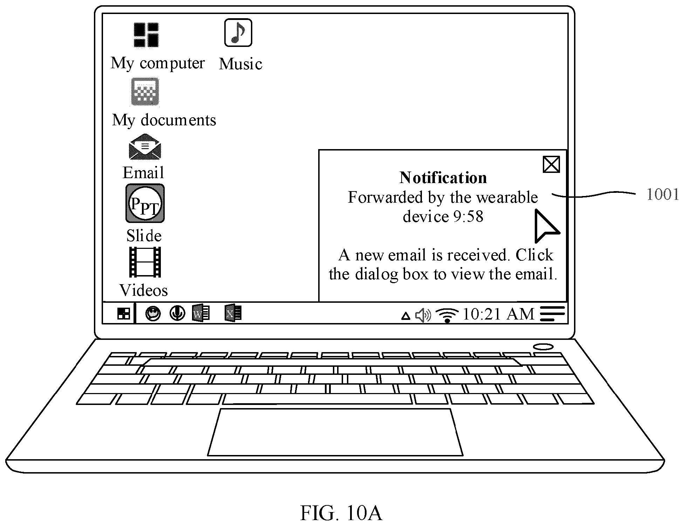

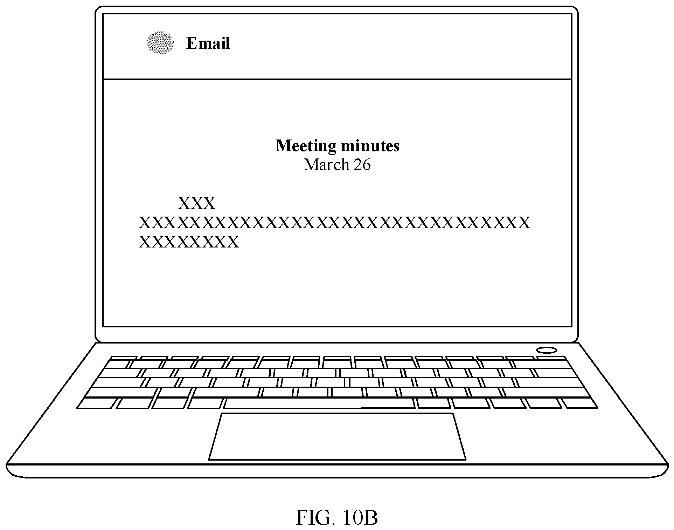

FIG. 10A is a user interface after the computer receives the execution message, including a mail prompt box 1001. When detecting a user operation for the prompt box 1001, the computer opens a corresponding email. FIG. 10B shows an example of an application interface displayed after opening an email. Optionally, after receiving the execution message, the computer directly opens the corresponding email, that is, displays the application interface shown in FIG. 10B.

Optionally, before the smartwatch 202 detects a user operation for the control 901, the smartwatch 202 continuously monitors a nearby device. When subsequently detecting that the computer is in the power-on state, the smartwatch 202 outputs prompt information again to prompt the user to view a new email. Optionally, a control in the prompt information may be "View on the computer" or "View later on the computer".

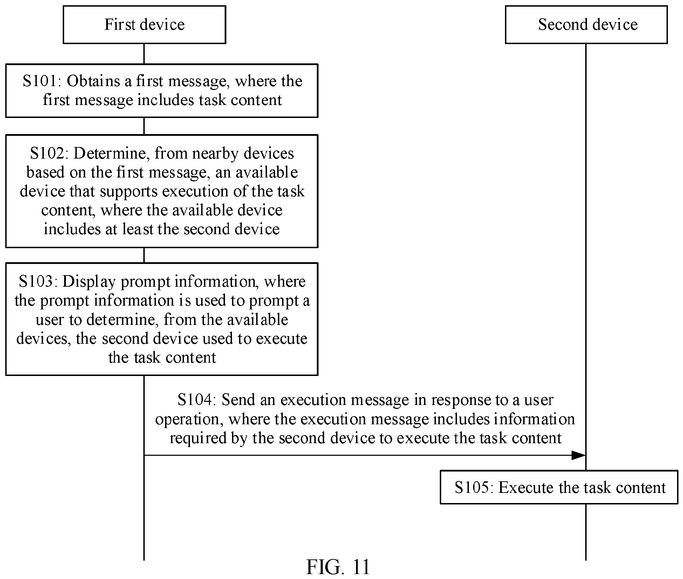

With reference to the foregoing network architectures and application interfaces, the following describes a method process of a task processing method provided in embodiments of this application. FIG. 11 is a schematic flowchart of a task processing method according to an embodiment of this application. A first device is an electronic device that displays a notification, for example, the foregoing smartphone. A second device is an electronic device that executes content in the notification, for example, the foregoing living room TV or Pad. As shown in FIG. 11, the task processing method may include the following steps.

Step S101: The first device obtains a first message.

The first message may be notification information provided by a third-party server, and the first device obtains the notification information provided by the third-party server. The third-party server includes a background server, a cloud server, and the like for an application (for example, video software). The first device has application software corresponding to the third-party server. When the application software meets a specified event, the server corresponding to the application software generates notification information and sends the notification information to the first device. The notification information includes information such as notification content and a notification source. The notification information may further include a notification type. Optionally, the first device may determine the notification type based on the notification content and the notification source.

The notification content includes text content (for example, a title or a notification text) and task content (for example, playing a video or audio, or jumping to a web page). The text content briefly describes the notification. The task content indicates a to-be-executed task and includes resource information for executing the to-be-executed task. For example, the task content is playing a video, and the resource information in the task content includes a uniform resource locator (Uniform Resource Locator, URL) of the video. The resource information may be used to initiate a request to a network to obtain resource data and jump to a corresponding application interface. The notification type includes an audio notification, a video notification, an image and text notification, a web page notification, an email notification, and the like.

In this embodiment of this application, the text content may be referred to as description information of the task content. Optionally, all other pieces of information in the first message other than the task content may be referred to as description information of the task content, for example, the text content, the message source, and the notification type.

A video notification is used as an example. The first device obtains notification information sent by the third-party server. The notification information includes: a notification type is a video notification, a notification source is video software, text content of notification content is "A video is updated in video software", and task content includes a resource address of the video, and indicates to play the video.

A web page notification is used as an example. Text content of the notification may be "View today's latest news", and task content includes a web page address of the "View today's latest news", and indicates to jump to the web page address.

In some embodiments, the notification information may further include a list of devices that support the notification type of the notification information. The third-party server may determine, based on the notification type, the list of devices that support the notification type. For example, when the application software meets the specified event, the server corresponding to the application software generates the notification information. For example, if a video in video software is updated, a server of the video software generates notification information about update of the video. The server includes a correspondence between a notification type and a device, and determines, based on the correspondence, the device that supports the video notification. For example, a device that supports a web page notification is an electronic device having a display, and a device list may include electronic devices such as a computer, a tablet computer, and a mobile phone. A device that supports an audio notification is an electronic device having an audio output function, and a device list may include electronic devices such as a speaker, a headset, a mobile phone, and a tablet computer. A device that supports a video notification is an electronic device having a display and an audio output function, and a device list may include electronic devices such as a mobile phone, a television, and a computer.

Optionally, the notification information may include a device attribute that supports the notification type of the notification information. For example, a device attribute that supports a video notification is having a display and an audio output function.

In some embodiments, the notification information may further include a device priority that supports the notification type of the notification information. The third-party server includes a correspondence between the notification type and the device priority. For example, a device that supports a video notification is an electronic device having a display and an audio output function, for example, a mobile phone, a television, or a computer. For the video notification, a priority of the television>a priority of the computer>a priority of the mobile phone.

For another example, a device that supports an audio notification is an electronic device having an audio output function, for example, a speaker, a mobile phone, a television, or a computer. For the audio notification, a priority of the speaker>a priority of the mobile phone>a priority of the computer>a priority of the television.

Optionally, different pieces of application software may have different correspondences between notification types and device priorities.

In some embodiments, the first message may be notification information provided by a system application of the first device, and the first device obtains the notification information provided by the system application. The system application is, for example, an alarm or a notepad. The notification information includes information such as notification content, a notification source, and a notification type.

The notification content includes text content (for example, a title or a notification text) and task content (for example, a video playing path or a picture viewing path). The text content briefly describes the notification. The task content provides resource information for executing the notification information, and a corresponding playing interface or viewing interface may be displayed by using the resource information. The notification type includes an audio notification, a video notification, an image and text notification, a web page notification, an email notification, and the like.

A video notification is used as an example. The first device obtains notification information sent by the system application. The notification information includes: a notification type is a video notification, a notification source is video software, text content of the notification is "A video is downloaded completely", and task content is a playing path of the video, and indicates to play the video.

An image notification is used as an example. Text content of the notification may be "View highlights in this day of last year", and task content is data of a photo taken on this day of last year, and indicates to output the photo data.

The first message is not limited to the example descriptions of the first message in the foregoing embodiment. The first message may be alternatively from another electronic device. In some embodiments, the first message may be a message forwarded or sent by the another electronic device. For example, the another electronic device shares data content with the first device (for example, sends an image or a document through Huawei Share), and the another electronic device sends, to the first device, a first message carrying the data content. The first device receives the first message, and the first message includes information such as text content, task content, and a message source. The text content briefly describes the first message, and the task content includes the data content and indicates to view the data content.

Step S102: Determine, from nearby devices based on the first message, an available device that supports execution of the task content in the first message, where the available device includes at least the second device.

After receiving the first message, the first device parses the first message to obtain information such as the text content, the task content, the message source, and a task type of the task content, and determines, from the nearby devices based on the task type, the available device that supports execution of the task content in the first message.

Specifically, the first device obtains device information of the nearby device. The nearby device is an electronic device included in a device management module of the first device. The device information includes a device identifier, a device attribute (for example, a display capability of the device, an audio capability of the device, or an interaction capability of the device), a current status of the device (for example, the device is turned on or off, a screen is turned off or on, whether the device is worn on a user, and a distance between the device and the first device), priority information of the device, and the like.

The device management module of the first device periodically obtains the device information of the nearby device. The nearby device includes a device within a communication range of the first device, or the nearby device includes a device, and the device and the first device are trusted devices of each other. The first device broadcasts a detection request at each preset interval. The detection request carries a device identifier of the first device. The first device receives a detection response based on the detection request. The detection response carries a device identifier of another device. The first device obtains and updates device information of the device within the communication range of the first device. For example, a detection response returned by a device at a moment T1 indicates that the device is a computer, and a device attribute is supporting a display output, supporting an audio output, and the like. Device information of the device that is obtained by the first device is "computer" and "supporting a display output, supporting an audio output, and the like", and information such as a physical distance between the device and the first device and a circumstance that the device is currently in a power-on state may be determined based on the detection response. When the device returns no detection response at a moment T2, it may be determined that the device is in a power-off state or a network disconnected state at the moment T2. The device information changes, and the first device updates a current status in the device information of the device to the power-off state or the network disconnected state. When the device returns a detection response at a moment T3, the first device may update the device information of the device again based on a device identifier of the device.

For example, the device information is shown in Table 1.

**Table 1**

| Device identifier | Device attribute | Supported output content | Current status |
|---|---|---|---|
| 0001 television | Large display, clear display, good sound quality, and difficult touch interaction | Video, audio, web page... | Power-on state |
| 0002 speaker | No screen display, good sound quality, and voice interaction | Audio | Power-on state |
| 0003 computer | Larger screen and good sound quality | Video, audio, email, web page... | Power-off state |
| 0004 tablet computer | Larger screen, touchscreen, good sound quality, and voice interaction | Video, audio, email, web page... | Power-on state |
| 0005 mobile phone | Small screen, good sound quality, voice interaction, portable, touchscreen, and good privacy | Video, audio, message, email, web page... | Power-on state |
| 0006 watch | Small screen, portable, touchscreen, and good privacy | Message, memo, alarm... | Power-on state |
| ... | ... | ... | |

After receiving the first message, the first device parses the first message, and obtains, from Table 1, a device identifier of a device that supports outputting the task content in the first message. For example, the first message includes: the task type is a video notification. In this case, an available device is an electronic device that has a display and can play a video. For another example, the first message includes: the task resource is video software, the text content is "A video is updated in video software", and the task content is a resource address of the video, and indicates to play the video. In this case, an available device is an electronic device that has a display and can play a video.

The first device determines an available device based on current statuses of the computer, the tablet computer, and the mobile phone. For example, the television is currently in a power-off state, and the tablet computer and the computer are currently in a power-on state. In this case, the first device determines that the available devices are the tablet computer and the computer.

One or more available devices may be preset. In some embodiments, when there are two or more electronic devices supporting outputting target content, the first device determines a unique available device by using a preset condition. For example,
a preset condition 1 is that a device with a highest priority is selected as an available device. For example, the first device has a correspondence between a notification type and a device priority, Details are shown in Table 2.

**Table 2**

| Notification type | Device priority |
|---|---|
| Image and text notification (pure display, no interaction) | Computer>Tablet computer>Mobile phone>Television... |
| Audio notification (voice broadcast) | Speaker>Mobile phone>Tablet computer>Computer... |
| Video notification (video playing) | Television>Computer>Tablet computer>Mobile phone... |
| ... | ... |

For a video notification, a device that can output a video includes a television, a computer, a tablet computer, a mobile phone, and the like. It can be learned from Table 2 that, for a video notification, a priority of the television>a priority of the computer>a priority of the tablet computer>a priority of the mobile phone. In this case, the first device determines that the unique available device is the television.

A preset condition 2 is that a closest device is selected as the available device. The first device may determine a distance between the first device and another device through Bluetooth received signal strength indication (Received Signal Strength Indication, RSSI) ranging or satellite positioning. For a video notification, a device that can output a video includes a television, a computer, a tablet computer, and the like. If the first device determines that a distance between the television and the first device is currently greater than a distance between the computer and the first device and greater than a distance between the tablet computer and the first device, the first device determines that the available device is the tablet computer.

It may be understood that the first device may determine two (or three, four...) available devices according to the foregoing preset condition.

In some embodiments, the first message includes a list of devices that support execution of the task content in the first message. The first device determines the available device with reference to the electronic devices in Table 1 based on the list of devices. For example, the list of supporting devices indicated in the first message includes a television, a computer, a tablet computer, and a vehicle-mounted display device. Because there is no vehicle-mounted display device in Table 1, the first device determines that the available device includes the television, the computer, and the tablet computer.

Further, the first device determines the available device based on current statuses of the computer, the tablet computer, and the mobile phone. For example, the television is currently in a power-off state, and the tablet computer and the computer are currently in a power-on state. In this case, the first device determines that the available devices are the tablet computer and the computer.

Optionally, the list of devices that support execution the task content in the first message may be a list including a device attribute. The first device determines the available device with reference to the electronic devices in Table 1 based on the device attribute. For example, a device attribute that supports a video notification is having a display and an audio output function. An electronic device having a display and an audio output function is selected from Table 1, and the electronic device is an available device.

Optionally, the first message includes a list of devices that support execution of the task content in the first message and device priorities. The first device determines the available device with reference to the electronic devices in Table 1 based on the list of devices and the device priorities. For example, the list of supporting devices indicated in the first message includes a television, a computer, a tablet computer, and a vehicle-mounted display device. Because there is no vehicle-mounted display device in Table 1, the first device determines that the available device includes the television, the computer, and the tablet computer. One or more available devices may be preset. The first message indicates that a device priority of the television>a device priority of the computer>a device priority of the tablet computer. When one available device is preset, the available device is the television. When two available devices are preset, the available devices are the television and the computer.

Step S103: Display prompt information, where the prompt information is used to prompt the user to determine, from the available devices, the second device used to execute the task content.

After determining the available device, the first device displays the prompt information on a display. The prompt information includes the text content in the notification content and one or more controls. Each of the one or more controls is associated with one device identifier and associated with the task content in the notification content. When the first device detects a user operation for one of the controls, the first device sends task content associated with the control to a device corresponding to the control, and indicates the device corresponding to the control to execute the task content. In this embodiment of this application, the device corresponding to the control is the second device.

A display form of the prompt information includes a slide-down interface notification (referring to 703 in FIG. 7A), a status bar notification (referring to 402 in FIG. 5B), a lock screen notification (referring to 402 in FIG. 5A), and the like. The display form of the prompt information may be based on a current status of the first device. For example, if the first device is currently in a screen-locked state, the display form of the prompt information is shown as 402 in FIG. 5A (or 402 in FIG. 4A). If the first device is currently in a screen-on and screen-unlocked state, the display form of the prompt information is shown as 402 in FIG. 5B (or 402 in FIG. 4B). If the first device is currently in a screen-on and screen-unlocked state, and does not receive, within preset duration, a user operation for processing the prompt information, the display form of the prompt information is shown as 703 in FIG.7A.

Specifically, FIG. 5B is used as an example. The prompt information includes two controls: "View now" and "View on the living room TV". The "View now" control is associated with the first device, and the "View on the living room TV" control is associated with a device identifier of the living room TV

In some embodiments, the prompt information includes the text content in the notification content and one or more controls. One of the one or more controls may be associated with one device identifier and associated with the task content in the notification content. One control may be further associated with one or more controls, and each of the one or more controls is associated with one device identifier and associated with the task content in the notification content.

FIG. 4B and FIG. 4D are used as examples. The prompt information includes two controls: a "View now" control and a "Select a device for viewing" control. The "View now" control is associated with the first device, the "Select a device for viewing" control is associated with one or more controls, and each of the one or more controls is associated with a device identifier of one electronic device.

In some embodiments, the control in the prompt information may change with the device information. For example, the prompt information includes a control associated with a device identifier of the second device. The control may trigger the second device to execute the task content. Before the first device detects a user operation for the control, the first device detects that device information of the second device changes. In this case, the second device is not within the communication range of the first device. For example, the second device is turned off or disconnected from a network. In this case, the second device is no longer an available device, and the first device changes the control that is associated with the device identifier of the second device and that is in the prompt information. A changing manner may be deleting the control, or may be associating the control with another device to trigger the another device to execute the task content. FIG. 8A to FIG. 8D are used as examples. At the moment T1 and the moment T2, controls in same prompt information output by the first device may be changed.

Step S104: Send an execution message to the second device in response to a user operation, where the execution message includes information required by the second device to execute the task content.

The first device displays the prompt information. The user triggers one of the controls in the prompt information, and a device identifier associated with the control indicates the second device. In this case, the first device sends the execution message to the second device in response to the user operation. The execution message includes the information required by the second device to execute the task content, including resource information, an execution application, and the like. Specifically,
for a video notification, the second device may be a television, a computer, a tablet computer, or the like. The execution message may include a uniform resource locator (Uniform Resource Locator, URL) of a video, and indicate the second device to initiate a video playing request to the network by using the URL. The task content may also include video data. The first device sends the video data to the second device by using a protocol, for example, a DLNA protocol and a Miracast protocol, and indicates the second device to play the video. This scheme may be also used to process an image and text notification.

For an audio notification, the second device may be a speaker, a mobile phone, or the like. The execution message may include audio data. The first device transmits the audio data to the second device by using a Bluetooth protocol, and indicates the second device to play audio. The task content may further include a URL, and indicates the second device to initiate an audio playing request to a network by using the URL.

An image and text notification is mostly text content, and the first device may directly transmit the text content to the second device. Optionally, the second device extracts a keyword (for example, a title) based on the text content, to perform searching by using a search engine, so as to further recommend reading to the user. This improves reading experience of the user.

It should be noted that the task content obtained by the first device in step S101 may include a URL, or may include video playing data, image data, or the like. When obtained resource content is a URL, the first device may download, to a local file, a data resource (for example, video playing data, audio playing data, or image data) corresponding to the URL. In step S104, a path of the data resource in the local file is sent to the second device.

In some embodiments, the control may be associated with a time point at which the first device sends the execution message. The first device sends the execution message to the second device after preset duration in response to the user operation. For example, the first device displays the prompt information. When the user triggers one of the controls in the prompt information, a device identifier associated with the control indicates the second device, and the control indicates to send the execution message five minutes after the user triggers the control. In this case, the first device sends the execution message to the second device five minutes later in response to the user operation.

Step S105: The second device executes the task content.

The second device receives the execution message sent by the first device, and executes the task content. The execution message includes the information required by the second device to execute the task content, including the resource information, the execution application, and the like. After receiving the execution message, the second device may automatically run a corresponding application or program to execute the task content. Specifically, when the task content includes the URL, the second device starts corresponding application software based on the execution application, sends a request to a network based on the URL, and obtains the data resource corresponding to the URL. The second device outputs the data resource in the application software. When resource content is video playing data, audio playing data, picture data, or the like in a local file, the second device establishes a projection connection to the first device, and directly outputs the resource content.

For example, video software sends notification information to the first device. The notification information includes a URL of a to-be-played video. The first device sends the URL to the second device. After the second device receives the URL, the second device starts the video software (or a client having a same server as the video software), and requests playing data of the to-be-played video from the server of the video software based on the URL. The second device plays the to-be-played video by using the video software. As shown in FIG. 6, the living room TV directly starts the video software for playing, and the video software does not need to be in a running state (which includes running in the background) before receiving the resource content. The user may directly watch the video on the living room TV through one time of interaction in the prompt information. This reduces operations and improves user experience.

In some embodiments, the second device does not have the client of the video software, and the second device cannot play the to-be-played video. In this case, after receiving the execution message sent by the first device, the second device sends a projection request to the first device through a wireless connection established through networking. The projection request may carry the device identifier of the second device. After the first device receives the projection request, the first device wakes up a projection service process. The projection service process may further wake up an operating system of the first device, so that the operating system of the first device generates corresponding display data (playing data of the to-be-played video) and stores the corresponding display data in a video card of the first device. In addition, the first device sends the display data to the second device by using a protocol, for example, the DLNA protocol or the Miracast protocol. After receiving the display data, the second device displays the display data on a display of the second device. Subsequently, the projection service process may still transmit the display data to the second device in real time.

In some embodiments, a control may be associated with a time point at which the second device executes the task content. The first device sends, to the second device in response to a user operation for the control, an execution message and an execution time point at which the task is executed. In this case, the second device executes the task content according to the execution time point. For example, the second device receives the execution message sent by the first device, and further receives an instruction for instructing the second device to execute the task content five minutes later. In this case, the second device executes the task content by timing for five minutes by using a timer.

In some embodiments, the second device may control execution progress of the task content. Refer to FIG. 6. The second device is the living room TV After receiving a video resource sent by the first device, the living room TV outputs the video resource. In a process in which the living room TV outputs the video resource, video playing progress may be correspondingly controlled by using, for example, the back control 602, the playing control 603, and the fast-forward control 604.

In this embodiment of this application, the second device and the first device may be a same device. For example, in FIG. 5B, when the first device detects a control for "Watch now", an electronic device that executes the task content is the first device. The first device does not need to perform step S104, and the first device directly outputs the resource information in the task content.

In this embodiment of this application, the first device obtains the first message, and determines, from the nearby devices based on the first message, the available device that supports execution of the task content. The first device displays the prompt information based on the available device. The prompt information is used to associate the task content with a device identifier of the available device, and is used to prompt the user to determine, from the available devices, the second device that is used to execute the task content. The first device sends the execution message to the second device in response to the user operation, and the second device executes the task content in response to the execution message. In this implementation, the task content is associated with the available device, and different available devices are provided for different task content. In addition, the prompt information is used as a carrier, so that the user can implement a cross-device content output in the prompt information, and process the prompt information in real time. This improves user experience.

With reference to the foregoing embodiments, in some possible implementations, other function controls are displayed in the prompt information after the first device sends the execution message to the second device in response to the user operation in step S 104.

Specifically, the other function controls include a stop control and a switching control. The stop control is associated with the device identifier of the second device, and indicates to stop viewing on the second device. The switching control is associated with a device identifier of another available device, and indicates to view on another electronic device. Refer to FIG. 7D, "Being viewed on the living room TV" is displayed in the prompt information, which indicates that the prompt information is currently processed on the living room TV The prompt information includes a "Stop viewing on the living room TV" control and a "Switch to a device for viewing" control. The "Stop viewing on the living room TV" control is associated with a device identifier of the living room TV The "Switch to a device for viewing" control is associated with one or more controls, and each of the one or more controls is associated with a device identifier of one electronic device.

When the first device detects a user operation for the "Stop viewing on the living room TV" control, the first device sends a playing stop request to the living room TV, and the second device stops executing the task content in response to the request. When the first device detects a user operation for the "Switch to a device for viewing" control, the first device outputs controls of one or more switchable devices, for example, a Pad, a computer, and a mobile phone. If the user chooses to switch to the Pad for viewing, the first device sends a playing stop request to the living room TV in response to the user operation, and sends the execution message to the Pad. The Pad executes the task content. Optionally, playing progress of the Pad may be playing from the beginning, or may be continuing to play from progress at which the living room TV stops playing.

With reference to the foregoing embodiments, in some possible implementations, the prompt information may further include a "View later" control. Specifically, the first device receives the first message. The first message includes the list of devices that support execution of the task content in the first message. If no electronic device in the list of devices matches the nearby device of the first device, that is, a quantity of available devices determined by the first device from the nearby devices based on the first message is zero, the prompt information output by the first device includes the "View later" control, and the control is associated with a device identifier of an electronic device in the list of devices that is supported by the first message. After the first device detects a user operation for the control, the first device responds to the user operation. When the first device detects that the nearby devices of the first device include the electronic device associated with the control, the first device sends the execution message to the electronic device.

For example, an email application sends notification information to a mobile phone, to indicate that a new email is received. The notification information indicates that a device that supports the notification information is a unique device, namely, a computer. However, the mobile phone has no network connection to the computer at this time, and an available device obtained by the mobile phone does not include the computer. In this case, the mobile phone displays prompt information. The prompt information includes text content of a new email reminder and a "View later on the computer" control.

When the mobile phone detects a user operation for the "View later on the computer" control, the mobile phone continuously monitors the nearby device. When the mobile phone subsequently detects that the mobile phone establishes a network connection to the computer (that is, obtains device information of the computer from the nearby device), the mobile phone sends an execution message to the computer. The execution message is used to start an email application on the computer or is used to project the email application on the mobile phone to the computer. Specifically, after the computer receives the execution message, the computer displays an email prompt box (referring to FIG. 10A) or directly opens a corresponding email (referring to FIG. 10B). In another specific scenario, after the computer receives the execution message, the computer sends a projection request to the mobile phone. After receiving the projection request, the mobile phone sends display data (which is text content of the new email) in the email application to the computer by using a protocol, for example, the DLNA protocol or the Miracast protocol. The computer displays the text content of the new email in the email application based on the display data.

When the mobile phone detects no user operation for the prompt information within preset duration, the mobile phone continuously monitors the nearby device. When the mobile phone subsequently detects that the mobile phone establishes a network connection to the computer (that is, obtains device information of the computer from the nearby device), the mobile phone displays the prompt information again. A control in the prompt information is a "View on the computer" control. Because the computer is currently within a communication range of the mobile phone, the "View later on the computer" control in the prompt information is changed to the "View on the computer" control. To be specific, the control in the prompt information may dynamically change with device information.

Optionally, when the mobile phone detects no user operation for the prompt information within the preset duration, the mobile phone continuously monitors the nearby device. When the mobile phone subsequently detects that the mobile phone establishes the network connection to the computer (that is, obtains the device information of the computer from the nearby device), the mobile phone measures a distance between the mobile phone and the computer. If the distance between the mobile phone and the computer is less than a threshold, the mobile phone outputs the prompt information again to prompt the user to view the new email. The control in the prompt information is the "View on the computer" control.

A measurement manner in which the mobile phone measures the distance between the mobile phone and the computer includes Bluetooth RSSI ranging or satellite positioning. During Bluetooth RSSI ranging, a Bluetooth module of the mobile phone sends a broadcast signal, and the computer sends a response signal based on the broadcast signal. Based on received signal strength of the computer, the mobile phone obtains, through calculation, the distance between the mobile phone and the computer based on a set of positioning algorithms and by using a mathematical relationship. In this way, the signal strength is converted into the measured distance.

The measurement manner in which the mobile phone measures the distance between the mobile phone and the computer further includes measuring by using a personal device. For example, the mobile phone establishes a Bluetooth connection to a smartwatch. When the mobile phone receives a new email reminder sent by the email application, the mobile phone displays prompt information, and synchronizes the prompt information to the smartwatch through Bluetooth. The mobile phone and the computer are in a local area network. The smartwatch measures a distance between the smartwatch and the computer. If the distance between the smartwatch and the computer is less than a threshold, the smartwatch sends an indication message to the mobile phone. The mobile phone sends the prompt information to the computer in response to the indication message. The computer receives the prompt information, and outputs an email prompt box (referring to FIG. 10A) on a display of the computer, to prompt the user to view a new email.

In some application scenarios, when receiving a new email, the email application sends notification information to the mobile phone. After receiving the notification information, the mobile phone determines, from the nearby devices based on the notification information, an available device that supports execution of task content. If supporting devices in the notification information are the computer and the mobile phone, and a quantity of the available devices other than the mobile phone is zero, the mobile phone displays prompt information. The prompt information includes a "View now" control and a "View later on the computer" control.

Based on the foregoing application scenario, in a home scenario, each electronic device at home may automatically access a same local area network. The user wears the smartwatch, sits at a computer desk, and handles official business. If the mobile phone of the user is not near the user at this time, when the email application receives a new email, the mobile phone displays prompt information. The prompt information includes a "View now" control and a "View later on the computer" control. The mobile phone synchronizes the prompt information to the smartwatch through Bluetooth. The smartwatch has no function or permission to view an email. In this case, the smartwatch displays the "View later on the computer" control. In this case, the user may trigger the "View later on the computer" control on the smartwatch, and turn on the computer. The computer accesses a network. After detecting the user operation, the smartwatch sends an instruction to the mobile phone. In response to the instruction, the mobile phone sends an execution message to the computer when detecting that the mobile phone establishes the network connection to the computer. The execution message is used to start the email application on the computer or is used to project the email application on the mobile phone to the computer.

In some embodiments, the first device receives notification information. The notification information includes a list of devices that support a notification type of the notification information. If an electronic device in the list of devices uniquely matches a nearby device of the first device, the device is an available device. If the available device is in a standby state (screen-off), prompt information output by the first device includes a "View later" control, and the control is associated with a device identifier of the available device. After the first device detects a user operation for the control, the first device responds to the user operation, and the first device sends an execution message to the available device. When the available device is in a power-on state, the available device executes task content.

A task processing method provided in an embodiment of this application may include the following steps.

S201: A first device obtains a first message, where the first message includes task content and description information of the task content.

For step S201, refer to the descriptions of step S101 in the embodiment shown in FIG. 11. Details are not described herein again.

S202: The first device displays a first prompt window on a first interface, where the first prompt window includes a first control and the description information of the task content, and the first control is associated with a second device.

For step S202, refer to the descriptions of step S103 in the embodiment shown in FIG. 11. Details are not described herein again. The first prompt window may be the prompt information in step S103. The first prompt window may be, for example, the notification bar 402 in FIG. 4A to FIG. 4D, FIG. 5A, and FIG. 5B. The first control may be, for example, the control 405 in FIG. 5B. The second device may be, for example, the living room TV shown in FIG. 6.

S203: The first device receives a first input of a user for the first control. The first input is not limited to a tap operation, a touch operation, a voice operation, and the like.

S204: The first device sends a first instruction to the second device in response to the first input, where the first instruction instructs the second device to execute the task content.

For step S204, refer to the descriptions of step S104 in the embodiment shown in FIG. 11. Details are not described herein again. The first instruction may be the execution message in step S104.

In some embodiments, after the first device sends the first instruction to the second device, the method further includes: The first device displays a second control; the first device receives a second input of the user for the second control; the first device sends a second instruction to the second device in response to the second input; and the second instruction instructs the second device to stop executing the task content. Herein, a stop control is provided. In a process in which the second device executes the task content, the first device can output the stop control (the second control), and the user controls, by using the second control, the second device to stop executing the task content. The user can suspend, at any time, the device from executing the task content. This improves user experience.

The second control may be, for example, the control 801 in FIG. 7D. The electronic device receives a user operation (the second input) for the control 801, and indicates the living room TV (the second device) to stop executing the task content.

In some embodiments, after the first device sends the first instruction to the second device, the method further includes: The first device displays a third control, where the third control is associated with a third device; the first device receives a third input of the user for the third control; the first device sends a second instruction to the second device in response to the third input, where the second instruction instructs the second device to stop executing the task content; and the first device sends a third instruction to the third device in response to the third input, where the third instruction instructs the third device to execute the task content. Herein, a switching control is provided. In a process in which the second device executes the task content, the first device can output the switching control (the third control), and the user controls, by using the third control, the second device to stop executing the task content, and indicates another device to execute the task content. In this way, an effect of real-time switching is achieved, and the user can switch, at any time, a device that executes the task content. This improves user experience.

Optionally, the third device may restart to execute the task content, or the third device may continue execution progress of the second device and continue to execute the task content. For example, the second device is executing the task content, that is, is playing a video. In this case, the first device receives a user operation of switching to the third device for playing, and the first device indicates the second device to stop playing the video, and indicates the third device to play the video at the same time. Playing progress of the third device may be playing from the beginning, or may be continuing to play from progress in which the second device stops playing.

The third control may be, for example, the control 803 or the control 804 in FIG. 7F. The control 803 and the control 804 are respectively associated with a Pad and the computer. The electronic device receives a user operation (the third input) for the control 803, and indicates the Pad (the third device) to execute the task content. Alternatively, the electronic device receives a user operation (the third input) for the control 804, and indicates the computer (the third device) to execute the task content.

Optionally, the third control may alternatively be, for example, the control 802 in FIG. 7D. The control 802 is associated with two controls: the control 803 and the control 804. The control 803 and the control 804 are respectively associated with the Pad and the computer. The electronic device receives a user operation (the third input) for the control 802, and the first device may indicate, by selecting the control 803 or the control 804, a corresponding device (the third device) to execute the task content.

In some embodiments, the first interface is a lock screen. That the first device sends a first instruction to the second device in response to the first input specifically includes: The first device sends the first instruction to the second device in response to the first input after the first device detects an unlock operation for the lock screen and is unlocked successfully. It is described herein that, in a scenario in which the first prompt window is output on the lock screen, when detecting the first input, the electronic device sends, to the second device after unlocking, an instruction for executing the task content.

The lock screen may be, for example, the user interface shown in FIG. 4A or FIG. 5A.

In some embodiments, the first message includes a task type of the task content. Before the first device displays the first prompt window on the first interface, the method further includes: The first device obtains device information of one or more devices within a communication range of the first device; and the first device determines, based on the device information of the one or more devices within the communication range of the first device, one or more available devices that support the task type for execution of the task content, where the available device includes the second device. The second device is a device within the communication range of the first device, and is a device that supports the task type for execution of the task content. The task type may include a video type task, an audio type task, an image and text type task, and the like. In this case, correspondingly, a device that supports execution of a video type task needs to have a display function and an audio function, a device that supports execution of an audio type task needs to have an audio function, and a device that supports execution of an image and text type task needs to have a display function and the like.

In some embodiments, the first message includes a list of devices that support execution of the task content. Before the first device displays the first prompt window on the first interface, the method further includes: The first device obtains device information of one or more devices within a communication range of the first device; and the first device determines one or more available devices from the device information of the one or more devices within the communication range of the first device based on the device list, where the available device includes the second device. The list of devices that support execution of the task content in the first message may be a list including a device type. For example, the list of devices that support execution of the task content is a computer or a tablet computer. The list of devices that support execution of the task content in the first message may be a list including device attributes. For example, the list of devices that support execution of the task content is a device having a display function and an audio function. The list of devices that support execution of the task content in the first device may be a list including specific device identifiers, and each device identifier represents a device, or the like.

In some embodiments, the method further includes: The first device determines an available device with a highest priority in the one or more available devices as the second device. A unique available device is selected based on a priority, to provide the user with a most appropriate device for executing the task content. This reduces selection operations of the user. Priority information may be set by the user, may be set by a system of the first device by default, may be set by using a third-party application, may be automatically determined by the first device based on the device attribute, or the like.

In some embodiments, the method further includes: The first device determines an available device that is in the one or more available devices and that is at a shortest physical distance from the first device as the second device. A unique available device is selected based on a physical distance, to provide the user with a most appropriate device for executing the task content. This reduces selection operations of the user.

In some embodiments, the first prompt window further includes a fourth control. The fourth control is associated with one or more controls, and each of the one or more controls is associated with an available device other than the second device. After the first device displays the first prompt window on the first interface, the method further includes: The first device displays the one or more controls when the first device detects a fourth input for the fourth control. Herein, a control of a list of to-be-selected devices is provided. After the first device determines one or more available devices, the first device can output the control (the fourth control) for the list of to-be-selected devices, and the user can view the one or more available devices by using the fourth control, and then autonomously select a device for executing the task content. In this way, an effect of autonomous selection is achieved, and the user can select, from a plurality of devices, a device for executing the task content. This improves user experience.

The fourth control may be, for example, the control 404 in FIG. 4A to FIG. 4D, and may be the control 7034 in FIG. 8A, FIG. 8C, and FIG. 8E. For example, the electronic device receives a user operation (the fourth input) for the control 7034 in FIG. 8A, and the first device outputs a control 7035 and a control 7036. The control 7035 is associated with the Pad, and the control 7036 is associated with the computer. Both the Pad and the computer are available devices.

In some embodiments, the one or more controls include a fifth control, and the fifth control is associated with a fifth device. After the first device displays the first prompt window on the first interface, the method further includes: The first device deletes the fifth control when one or more devices within a communication range of the first device no longer include the fifth device; and the first device displays one or more controls when the first device detects a fourth input for the fourth control, and the one or more controls do not include the fifth control. It is described herein that a control in the first prompt window can change with a device status. The fifth device is an available device at a first moment, and the first device outputs the fifth control associated with the fifth device. A status of the fifth device changes (that is, the fifth device is not within the communication range of the first device) at a second moment. In this case, the first device deletes the fifth control associated with the fifth device. Similarly, the status of the fifth device changes again (that is, the fifth device is within the communication range of the first device) at a third moment. In this case, the first device outputs the fifth control associated with the fifth device. In this way, a manner of changing an output control based on the device status improves timeliness, and can provide the user with a latest available device in real time. This improves user experience.

The fifth control may be, for example, the control 7035 in FIG. 8B. In this case, the fifth device is a device associated with the control 7035. The first moment is T1, and FIG. 8B includes the control 7035. The second moment is T2, and a status of the Pad corresponding to the control 7035 changes (that is, the Pad is not within the communication range of the first device) at this time. In this case, FIG. 8D does not include the control 7035. The third moment is T3, and the status of the Pad corresponding to the control 7035 changes again (that is, the Pad is within the communication range of the first device) at this time. In this case, FIG. 8E includes the control 7035.

In some embodiments, the second device and the first device are a same device.

In some embodiments, a same account or an associated account of a same account is logged in on the first device and the second device.

In some embodiments, the first message includes email notification information, video application notification information, instant messaging message notification information, and video call notification information.

In some embodiments, the first device is a mobile phone or a watch, and the second device is a computer, a tablet computer, or a television.

The following describes a schematic diagram of a framework of a task processing system according to an embodiment of this application.

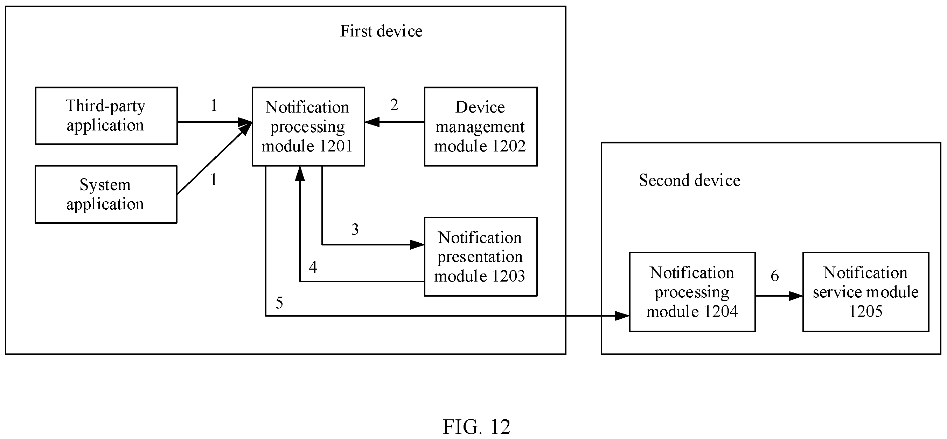

As shown in FIG. 12, the task processing system includes a first device and a second device. The first device includes a notification processing module 1201, a device management module 1202, and a notification presentation module 1203. The second device includes a notification processing module 1204 and a notification service module 1205.
1. A third-party application or a system application sends notification information to the notification processing module 1201 of the first device. The notification information includes text content and task content. The notification information may be referred to as a first message.
2. The notification processing module 1201 obtains device information of nearby devices from the device management module 1202.
3. The notification processing module 1201 determines, from the nearby devices based on a type of task content, an available device that supports execution of the task content, associates a device identifier of the available device with a control, and indicates the notification presentation module 1203 to present prompt information. The prompt information includes a control of the available device. The prompt information may be referred to as a first prompt window, and the control in the prompt information include a first control.
4. The notification presentation module 1203 receives a user operation (a first input) for the control (the first control) in the prompt information, and feeds back the user operation to the notification processing module 1201.
5. The notification processing module 1201 sends an execution message to a device (a second device) associated with the control. The execution message includes the task content.
6. After receiving the execution message, the notification processing module 1204 of the second device parses the execution message to obtain the task content, and indicates the notification service module 1205 to execute the task content.

For a part that is not described in detail in this embodiment of this application, refer to the embodiment shown in FIG. 11. Details are not described herein again.

In some embodiments, the first device is further configured to display a second control after sending a first instruction to the second device. The first device is further configured to receive a second input of a user for the second control. The first device is further configured to send a second instruction to the second device in response to the second input. The second device is further configured to stop executing the task content based on the received second instruction. Herein, a stop control is provided. In a process in which the second device executes the task content, the first device can output the stop control (the second control), and the user controls, by using the second control, the second device to stop executing the task content. The user can suspend, at any time, the device from executing the task content. This improves user experience.

The second control may be, for example, the control 801 in FIG. 7D. The electronic device receives a user operation (the second input) for the control 801, and indicates the living room TV (the second device) to stop executing the task content.

In some embodiments, the system further includes a third device. The first device is further configured to display a third control after sending the first instruction to the second device. The third control is associated with the third device. The first device is further configured to receive a third input of the user for the third control. The first device is further configured to send a second instruction to the second device in response to the third input. The second device is further configured to stop executing the task content based on the received second instruction. The first device is further configured to send a third instruction to the third device in response to the third input. The third device is configured to execute the task content based on the third input. Herein, a switching control is provided. In a process in which the second device executes the task content, the first device can output the switching control (the third control), and by using the third control, the user controls the second device to stop executing the task content, and indicates another device to execute the task content. In this way, an effect of real-time switching is achieved, and the user can switch, at any time, a device that executes the task content. This improves user experience.

Optionally, the third device may restart to execute the task content, or the third device may continue execution progress of the second device and continue to execute the task content. For example, the second device is executing the task content, that is, is playing a video. In this case, the first device receives a user operation of switching to the third device for playing, and the first device indicates the second device to stop playing the video, and indicates the third device to play the video at the same time. Playing progress of the third device may be playing from the beginning, or may be continuing to play from progress in which the second device stops playing.

The third control may be, for example, the control 803 or the control 804 in FIG. 7F. The control 803 and the control 804 are respectively associated with a Pad and the computer. The electronic device receives a user operation (the third input) for the control 803, and indicates the Pad (the third device) to execute the task content. Alternatively, the electronic device receives a user operation (the third input) for the control 804, and indicates the computer (the third device) to execute the task content.

Optionally, the third control may alternatively be, for example, the control 802 in FIG. 7D. The control 802 is associated with two controls: the control 803 and the control 804. The control 803 and the control 804 are respectively associated with the Pad and the computer. The electronic device receives a user operation (the third input) for the control 802, and the first device may indicate, by selecting the control 803 or the control 804, a corresponding device (the third device) to execute the task content.

In some embodiments, a first interface is a lock screen. The first device is configured to send the first instruction to the second device in response to the first input after an unlocking operation for the lock screen is detected and is unlocked successfully. It is described herein that, in a scenario in which the first prompt window is output on the lock screen, when detecting the first input, the electronic device sends, to the second device after unlocking, an instruction for executing the task content.

The lock screen may be, for example, the user interface shown in FIG. 4A or FIG. 5A.

In some embodiments, the first message includes a task type of the task content. The first device is further configured to obtain device information of one or more devices within a communication range of the first device before displaying the first prompt window on the first interface. The first device is further configured to determine, based on the device information of the one or more devices within the communication range of the first device, one or more available devices that support the task type for execution of the task content. The available device includes the second device. The second device is a device within the communication range of the first device, and is a device that supports execution of the task content that is of the task type. The task type may include a video type task, an audio type task, an image-and-text type task, and the like. In this case, correspondingly, a device that supports execution of the video type task needs to have a display function and an audio function, a device that supports execution of the audio type task needs to have an audio function, and a device that supports execution of the image-and-text type task needs to have a display function and the like.

In some embodiments, the first message includes a list of devices that support execution of the task content. The first device is further configured to obtain device information of one or more devices within a communication range of the first device before displaying the first prompt window on the first interface. The first device is further configured to determine one or more available devices from the device information of the one or more devices within the communication range of the first device based on the device list. The available device includes the second device. The list of devices that support execution of the task content in the first message may be a list including a device type. For example, the list of devices that support execution of the task content is a computer or a tablet computer. The list of devices that support execution of the task content in the first message may be a list including a device attribute. For example, the list of devices that support execution of the task content is a device having a display function and an audio function. The list of devices that support execution of the task content in the first device may be a list including a specific device identifier, and each device identifier represents a device, or the like.

In some embodiments, the first device is further configured to determine an available device with a highest priority in the one or more available devices as the second device. Only one available device is selected by using a priority, to provide the user with a most appropriate device for executing the task content. This reduces a selection operation of the user. Priority information may be set by the user, may be set by a system of the first device by default, may be set by using a third-party application, may be automatically determined by the first device based on the device attribute, or the like.

In some embodiments, the first device is further configured to determine an available device at a shortest physical distance from the first device in the one or more available devices as the second device. Only one available device is selected by using a physical distance, to provide the user with a most appropriate device for executing the task content. This reduces a selection operation of the user.

In some embodiments, the first prompt window further includes a fourth control. The fourth control is associated with one or more controls, and each of the one or more controls is associated with an available device other than the second device. The first device is further configured to: after displaying the first prompt window on the first interface, display the one or more controls when detecting a fourth input for the fourth control. Herein, a control of a list of to-be-selected devices is provided. After the first device determines one or more available devices, the first device can output the control (the fourth control) for the list of to-be-selected devices, and the user can view the one or more available devices by using the fourth control, and then autonomously select a device for executing the task content. In this way, an effect of autonomous selection is achieved, and the user can select, from a plurality of devices, a device for executing the task content. This improves user experience.

The fourth control may be, for example, the control 404 in FIG. 4A to FIG. 4D, and may be the control 7034 in FIG. 8A, FIG. 8C, and FIG. 8E. For example, the electronic device receives a user operation (the fourth input) for the control 7034 in FIG. 8A, and the first device outputs a control 7035 and a control 7036. The control 7035 is associated with the Pad, and the control 7036 is associated with the computer. Both the Pad and the computer are available devices.

In some embodiments, the one or more controls include a fifth control, and the fifth control is associated with a fifth device. The first device is further configured to: after displaying the first prompt window on the first interface, delete the fifth control when one or more devices within a communication range of the first device no longer include the fifth device. The first device is further configured to display one or more controls when detecting a fourth input for the fourth control, and the one or more controls do not include the fifth control. It is described herein that a control in the first prompt window can change with a device state. The fifth device is an available device at a first moment, and the first device outputs the fifth control associated with the fifth device. A state of the fifth device changes (that is, the fifth device is not within the communication range of the first device) at a second moment. In this case, the first device deletes the fifth control associated with the fifth device. Similarly, the state of the fifth device changes again (that is, the fifth device is within the communication range of the first device) at a third moment. In this case, the first device outputs the fifth control associated with the fifth device. In this way, a manner of changing an output control based on the device state improves timeliness, can provide the user with a latest available device in real time, and improves user experience.

The fifth control may be, for example, the control 7035 in FIG. 8B. In this case, the fifth device is a device associated with the control 7035. The first moment is T1, and FIG. 8B includes the control 7035. The second moment is T2, and a status of the Pad corresponding to the control 7035 changes (that is, the Pad is not within the communication range of the first device) at this time. In this case, FIG. 8D does not include the control 7035. The third moment is T3, and the status of the Pad corresponding to the control 7035 changes again (that is, the Pad is within the communication range of the first device) at this time. In this case, FIG. 8E includes the control 7035.

In some embodiments, the second device and the first device are a same device.

In some embodiments, a same account or an associated account of a same account is logged in on the first device and the second device.

In some embodiments, the first message includes email notification information, video application notification information, instant messaging message notification information, and video call notification information.

In some embodiments, the first device is a mobile phone or a watch, and the second device is a computer, a tablet computer, or a television.

An embodiment of this application discloses an electronic device, including a processor and a memory, an input device, an output device, and a communication module that are connected to the processor. The input device and the output device may be integrated into one device. For example, a touch sensor may be used as an input device, a display may be used as an output device, and the touch sensor and the display may be integrated into a touchscreen.

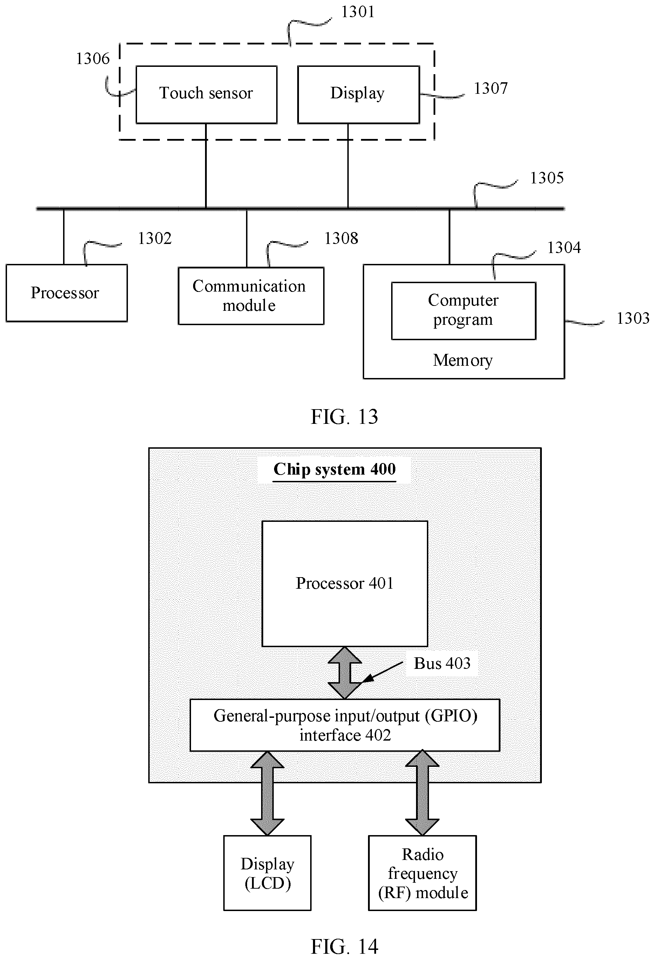

In this case, as shown in FIG. 13, the electronic device may include a touchscreen 1301, one or more processors 1302, a memory 1303, a communication module 1308, one or more applications (not shown), and one or more computer programs 1304. The touchscreen 1301 includes a touch sensor 1306 and a display 1307. The foregoing components may be connected through one or more communication buses 1305. The one or more computer programs 1304 are stored in the memory 1303 and are configured to be executed by the one or more processors 1302. The one or more computer programs 1304 include instructions, and the instructions may be used to perform the steps in the corresponding embodiments. All related content of the steps in the foregoing method embodiments may be cited in function descriptions of corresponding physical components. Details are not described herein again.

For example, the processor 1302 may be specifically the processor 110 shown in FIG. 1, the memory 1303 may be specifically the internal memory 221 and/or the external memory 220 shown in FIG. 1, the display 1307 may be specifically the display 294 shown in FIG. 1, the touch sensor 1306 may be specifically the touch sensor in the sensor module 200 shown in FIG. 1, and the communication module 1308 may be specifically the mobile communication module 250 and/or the wireless communication module 260 shown in FIG. 1. This is not limited in this embodiment of this application.

An embodiment of this application further provides a chip system 400. As shown in FIG. 14, the chip system 400 includes a processor 401 and one or more interfaces 402 coupled to the processor 401.

The processor 401 may be an integrated circuit chip and has a signal processing capability. In an implementation process, steps of the foregoing method can be implemented by using a hardware integrated logic circuit in the processor 401, or by using an instruction in a form of software. The processor 401 may be a general-purpose processor, a digital signal processor (DSP), an application-specific integrated circuit (ASIC), a field programmable gate array (FPGA) or another programmable logic device, a discrete gate, a transistor logic device, or a discrete hardware component. The processor may implement or perform the methods and steps that are disclosed in embodiments of this application. The general-purpose processor may be a microprocessor, or the processor may be any conventional processor or the like.

The interface 402 may send or receive data, instructions, or information. The processor 401 may process data, instructions, or other information received through the interface circuit 402, and send, through the interface circuit 402, information obtained after processing. In a specific implementation, the interface 402 may be a general-purpose input/output (general-purpose input/output, GPIO) interface, and may be connected to a plurality of peripheral devices (for example, a display (LCD) and a radio frequency (radio frequency, RF) module). The interface 402 is connected to the processor 401 through a bus 403.

In this embodiment of this application, the display (LCD) may display the interfaces shown in FIG. 4A to FIG. 8D in the foregoing embodiments. The radio frequency (radio frequency, RF) module may implement a communication connection between electronic devices (for example, between the first device and the second device).

Optionally, the chip system further includes a memory. The memory may include a read-only memory and a random access memory, and provide operation instructions and data for the processor. A part of the memory may further include a non-volatile random access memory (NVRAM).

Optionally, the memory stores an executable software module or a data structure, and the processor 401 may perform a corresponding operation by invoking operation instructions (the operation instructions may be stored in an operating system) stored in the memory.

Optionally, the chip system 400 may be used in the first device or the second device in embodiments of this application. Optionally, the interface 402 is configured to perform receiving and sending steps of the first device, the second device, and the like in the embodiment shown in FIG. 11. The processor 401 is configured to perform processing steps of the first device, the second device, and the like in the embodiment shown in FIG. 11. The memory is configured to store data and instructions of the first device, the second device, and the like in the embodiment shown in FIG. 11.

It should be noted that a function corresponding to each of the processor 401 and the interface 402 may be implemented by using a hardware design, or may be implemented by using a software design, or may be implemented in a combination of software and hardware. This is not limited herein.

An embodiment of this application further provides a computer-readable storage medium. All or some of the procedures in the foregoing method embodiments may be completed by a computer program instructing related hardware. The program may be stored in the foregoing computer storage medium. When the program is executed, the procedures of the foregoing method embodiments may be included. The computer-readable storage medium includes any medium that can store program code, such as a read-only memory (read-only memory, ROM), a random access memory (random access memory, RAM), a magnetic disk, or an optical disc.

An embodiment of this application further provides a computer program product. The methods described in the foregoing method embodiments may be all or partially implemented by software, hardware, firmware, or any combination thereof. If the methods are implemented in the software, all or some of the methods may be implemented in a form of the computer program product. The computer program product includes one or more computer instructions. When the foregoing computer program instructions are loaded and executed on a computer, all or a part of the procedures or functions according to the foregoing method embodiments are generated. The computer may be a general-purpose computer, a dedicated computer, a computer network, a network device, user equipment, or another programmable apparatus.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instruction may be stored in a computer-readable storage medium, or may be transmitted by using the computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A sequence of the steps of the method in embodiments of this application may be adjusted, combined, or removed based on an actual requirement.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A task processing method, comprising:
obtaining, by a first device, a first message, wherein the first message comprises task content and description information of the task content;
displaying, by the first device, a first prompt window on a first interface, wherein the first prompt window comprises a first control and the description information of the task content, and the first control is associated with a second device;
receiving, by the first device, a first input of a user for the first control; and
sending, by the first device, a first instruction to the second device in response to the first input, wherein the first instruction instructs the second device to execute the task content.

2. The method according to claim 1, wherein after the sending, by the first device, a first instruction to the second device, the method further comprises:
displaying, by the first device, a second control;
receiving, by the first device, a second input of the user for the second control; and
sending, by the first device, a second instruction to the second device in response to the second input, wherein the second instruction instructs the second device to stop executing the task content.

3. The method according to claim 1, wherein after the sending, by the first device, a first instruction to the second device, the method further comprises:
displaying, by the first device, a third control, wherein the third control is associated with a third device;
receiving, by the first device, a third input of the user for the third control;
sending, by the first device, a second instruction to the second device in response to the third input, wherein the second instruction instructs the second device to stop executing the task content; and
sending, by the first device, a third instruction to the third device in response to the third input, wherein the third instruction instructs the third device to execute the task content.

4. The method according to any one of claims 1 to 3, wherein the first interface is a lock screen, and the sending, by the first device, a first instruction to the second device in response to the first input specifically comprises:
in response to the first input, sending, by the first device, the first instruction to the second device after the first device detects an unlock operation on the lock screen and is successfully unlocked.

5. The method according to any one of claims 1 to 4, wherein the first message comprises a task type of the task content, and before the displaying, by the first device, a first prompt window on a first interface, the method further comprises:
obtaining, by the first device, device information of one or more devices within a communication range of the first device; and
determining, by the first device based on the device information of the one or more devices within the communication range of the first device, one or more available devices supporting the task type for execution of the task content, wherein the available device comprises the second device.

6. The method according to any one of claims 1 to 4, wherein the first message comprises a list of devices supporting execution of the task content, and before the displaying, by the first device, a first prompt window on a first interface, the method further comprises:
obtaining, by the first device, device information of one or more devices within a communication range of the first device; and
determining, by the first device, one or more available devices from the device information of the one or more devices within the communication range of the first device based on the list of devices, wherein the available device comprises the second device.

7. The method according to claim 5 or 6, wherein the method further comprises:
determining, by the first device, an available device with a highest priority in the one or more available devices as the second device.

8. The method according to claim 5 or 6, wherein the method further comprises:
determining, by the first device, an available device that is in the one or more available devices and that is at a shortest physical distance from the first device as the second device.

9. The method according to claim 1, wherein the first prompt window further comprises a fourth control, the fourth control is associated with one or more controls, each control of the one or more controls is associated with an available device other than the second device, and after the displaying, by the first device, a first prompt window on a first interface, the method further comprises:
displaying, by the first device, the one or more controls when the first device detects a fourth input for the fourth control.

10. The method according to claim 9, wherein the one or more controls comprise a fifth control, the fifth control is associated with a fifth device, and after the displaying, by the first device, a first prompt window on a first interface, the method further comprises:
deleting, by the first device, the fifth control when one or more devices within a communication range of the first device no longer comprise the fifth device; and
displaying, by the first device, one or more controls when the first device detects the fourth input for the fourth control, wherein the one or more controls do not comprise the fifth control.

11. The method according to any one of claims 1 to 10, wherein the second device and the first device are a same device.

12. The method according to any one of claims 1 to 10, wherein a same account or an associated account of a same account is logged in on the first device and the second device.

13. The method according to any one of claims 1 to 10, wherein the first message comprises email notification information, video application notification information, instant messaging message notification information, and video call notification information.

14. The method according to any one of claims 1 to 10, wherein the first device is a mobile phone or a watch, and the second device is a computer, a tablet computer, or a television.

15. A task processing system, comprising a first device and a second device, wherein
the first device is configured to obtain a first message, wherein the first message comprises task content and description information of the task content;
the first device is further configured to display a first prompt window on a first interface, wherein the first prompt window comprises a first control and the description information of the task content, and the first control is associated with the second device;
the first device is further configured to receive a first input of a user for the first control;
the first device is further configured to send a first instruction to the second device in response to the first input; and
the second device is configured to execute the task content according to the received first instruction.

16. The system according to claim 15, wherein the first device is further configured to display a second control after sending the first instruction to the second device;
the first device is further configured to receive a second input of the user for the second control;
the first device is further configured to send a second instruction to the second device in response to the second input; and
the second device is further configured to stop executing the task content according to the received second instruction.

17. The system according to claim 15, wherein the system further comprises a third device;
the first device is further configured to display a third control after sending the first instruction to the second device, wherein the third control is associated with the third device;
the first device is further configured to receive a third input of the user for the third control;
the first device is further configured to send a second instruction to the second device in response to the third input;
the second device is further configured to stop executing the task content according to the received second instruction;
the first device is further configured to send a third instruction to the third device in response to the third input; and
the third device is configured to execute the task content based on the third input.

18. The system according to any one of claims 15 to 17, wherein the first interface is a lock screen, and the first device is configured to send, in response to the first input, the first instruction to the second device after detecting an unlock operation on the lock screen and being unlocked successfully.

19. The system according to any one of claims 15 to 18, wherein the first message comprises a task type of the task content; the first device is further configured to obtain device information of one or more devices within a communication range of the first device before displaying the first prompt window on the first interface; and
the first device is further configured to determine, based on the device information of the one or more devices within the communication range of the first device, one or more available devices supporting the task type for execution of the task content, wherein the available device comprises the second device.

20. The system according to any one of claims 15 to 18, wherein the first message comprises a list of devices supporting execution of the task content; the first device is further configured to obtain device information of one or more devices within a communication range of the first device before displaying the first prompt window on the first interface; and
the first device is further configured to determine one or more available devices from the device information of the one or more devices within the communication range of the first device based on the list of devices, wherein the available device comprises the second device.

21. The system according to claim 19 or 20, wherein the first device is further configured to determine an available device with a highest priority in the one or more available devices as the second device.

22. The system according to claim 19 or 20, wherein the first device is further configured to determine an available device that is in the one or more available devices and that is at a shortest physical distance from the first device as the second device.

23. The system according to claim 15, wherein the first prompt window further comprises a fourth control, the fourth control is associated with one or more controls, and each control of the one or more controls is associated with an available device other than the second device; and
the first device is further configured to: after displaying the first prompt window on the first interface, display the one or more controls when detecting a fourth input for the fourth control.

24. The system according to claim 23, wherein the one or more controls comprise a fifth control, and the fifth control is associated with a fifth device;
the first device is further configured to: after displaying the first prompt window on the first interface, delete the fifth control when the one or more devices within the communication range of the first device no longer comprise the fifth device; and
the first device is further configured to display one or more controls when detecting a fourth input for the fourth control, wherein the one or more controls do not comprise the fifth control.

25. The system according to any one of claims 15 to 24, wherein the second device and the first device are a same device.

26. The system according to any one of claims 15 to 24, wherein a same account or an associated account of a same account is logged in on the first device and the second device.

27. The system according to any one of claims 15 to 24, wherein the first message comprises email notification information, video application notification information, instant messaging message notification information, and video call notification information.

28. The system according to any one of claims 15 to 24, wherein the first device is a mobile phone or a watch, and the second device is a computer, a tablet computer, or a television.

29. An electronic device, comprising a touchscreen, a memory, a processor, and a program, wherein the program is stored in the memory, and when the processor executes the program, the electronic device is enabled to implement the method according to any one of claims 1 to 14.

30. A computer storage medium, comprising computer instructions, wherein when the computer instructions are run on an electronic device, the electronic device is enabled to perform the method according to any one of claims 1 to 14.
